# EUROPÄISCHE PATENTANMELDUNG

(11) **EP 0 702 168 A2**
(43) Veröffentlichungstag der Anmeldung: **20.03.1996**
(21) Anmeldenummer: 95710016.7
(22) Anmeldetag: 25.08.1995
(51) Int. Cl.: F16H 47/00, F16H 47/04, F16H 57/00

(54) **Hydrostatisch-mechanisches Getriebe mit Leistungsverzweigung**

(30) Priorität: 25.08.1994 DE 4430101; 29.06.1995 DE 19523664; 05.08.1995 DE 29512655 U; 15.07.1995 DE 19525846; 24.08.1995 DE 19531109
(71) Anmelder: Meyerle, Michael, D-88074 Meckenbeuren (DE)
(72) Erfinder: Meyerle, Michael, D-88074 Meckenbeuren (DE)

(57) **Zusammenfassung**

Die Erfindung bezieht sich auf ein hydrostatisch-mechanisches Leistungsverzweigungsgetriebe, insbesondere für die Anwendung frontgetriebener Fahrzeuge. Das Hydrostatgetriebe (36) besteht aus zwei Hydrostat-Einheiten (A und B), die in einem gemeinsamen Gehäuse über geräuschisolierende Elemente gegenüber dem Hauptgehäuse (1) gelagert sind. Das Getriebe ist als Einbereichs-Getriebe ohne Kupplungen oder als Zweibereichs-Getriebe mit zwei Bereichskupplungen ausgebildet, wobei die hydraulische und mechanische Leistung in einem Summierungsplanetengetriebe (37; 37a) aufsummiert und über einen Triebstrang zu einem achsversetzt angeordneten Achsdifferential-Getriebe (15) geleitet wird. Es enthält verschiedene Anordnungsmöglichkeiten der Hauptkomponenten - Hydrostatgetriebe und Summierungsplanetengetriebe - sowie verschiedene Einrichtungen hinsichtlich Verbesserung des Umweltverhaltens, Verringerung von Bauraum und Kosten sowie Verbesserung des Fahrkomforts. Kurze, einfache und kostengünstige Bauweise sowie die geringe Anzahl der Bauteile sind besondere Vorteile der Erfindung.

## Beschreibung

Die Erfindung bezieht sich auf ein stufenloses Getriebe mit hydrostatischer Leistungsverzweigung wie in den Oberbegriffen der Ansprüche beschrieben. Aufgabe der Erfindung ist es, die Anzahl der Bauteile auf ein Mindestmaß zu senken, Bauraum und Kosten zu verringern, Geräuschverhalten, Wirkungsgrad und Komfort zu verbessern sowie eine Vereinfachung der Bauweise zu erzielen.

Die Aufgabe wird durch die in den Hauptansprüchen und weiteren Ansprüchen aufgeführten Merkmale gelöst. Weitere vorteilhafte Ausgestaltungen gehen aus den Unteransprüchen und der Beschreibung hervor.

Die Erfindung wird an Ausführungsbeispielen anhand von Zeichnungen erläutert. Es zeigen
- Figur 1: den Getriebeaufbau und die Anordnung der einzelnen Baukomponenten;
- Figur 1a: Getriebeschema für 2-Bereichsgetriebe
- Figur 2: eine weitere Ausgestaltung der Erfindung;
- Figur 2a: Getriebeschema für 1-Bereichsgetriebe
- Figur 2b: Getriebeschema für 2-Bereichsgetriebe
- Fig. 2c u. d: Getriebeschema für 1-Bereichsgetriebe als weitere Ausführungsform
- Fig. 2e u. f: Drehzahlplan
- Figur 3: das Getriebe-Schema mit Einrichtung für Allrad-Antrieb;
- Figur 4: das Getriebe-Schema für Ausführung in Längsbauweise und Frontantrieb.
- Figur 5: Schaltplan
- Figur 6: Schaltkorrektur-Diagramm
- Figur 7: Schaltventil mit Rücklaufsperre

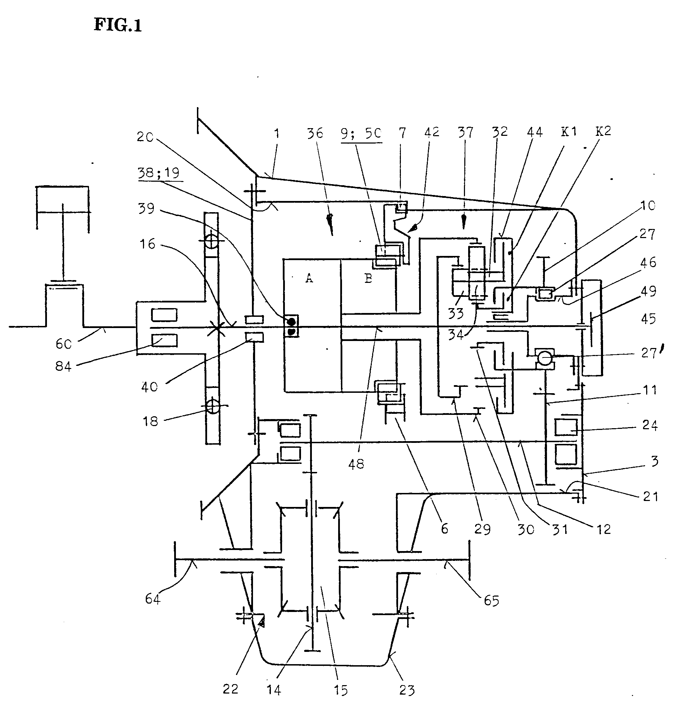

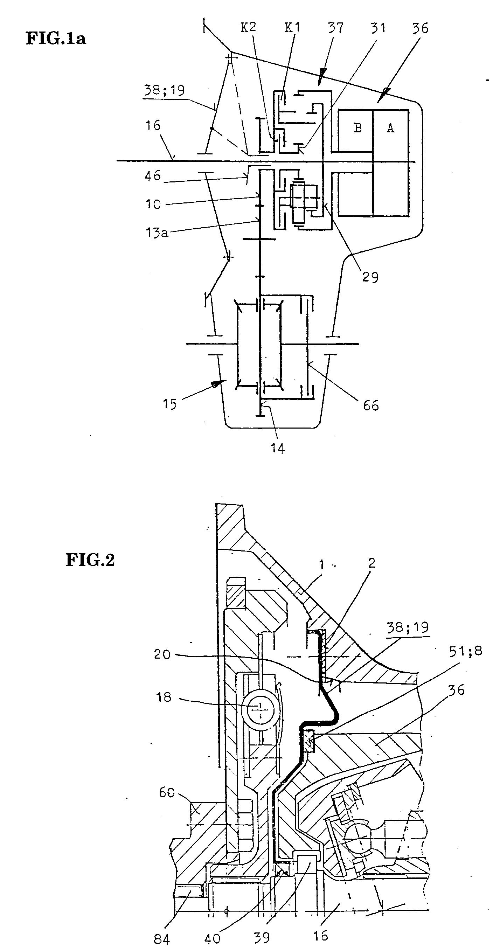

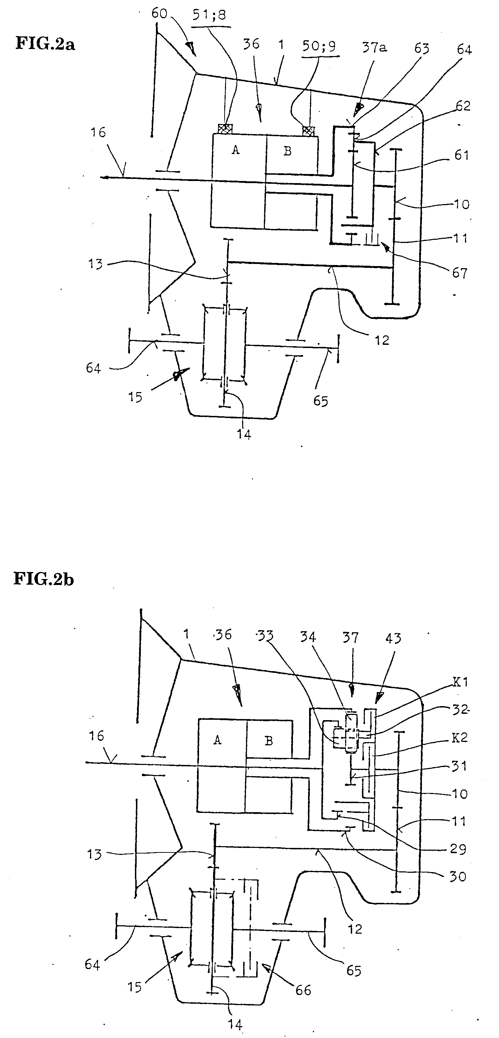

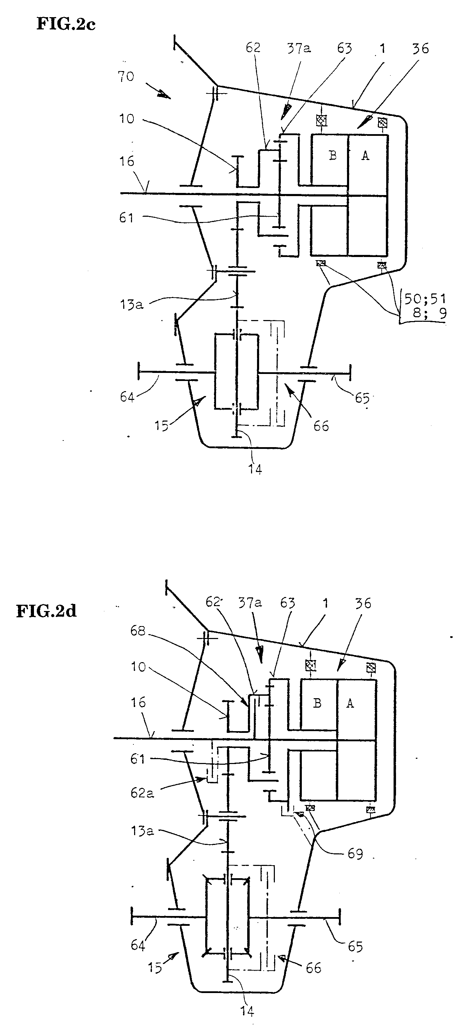

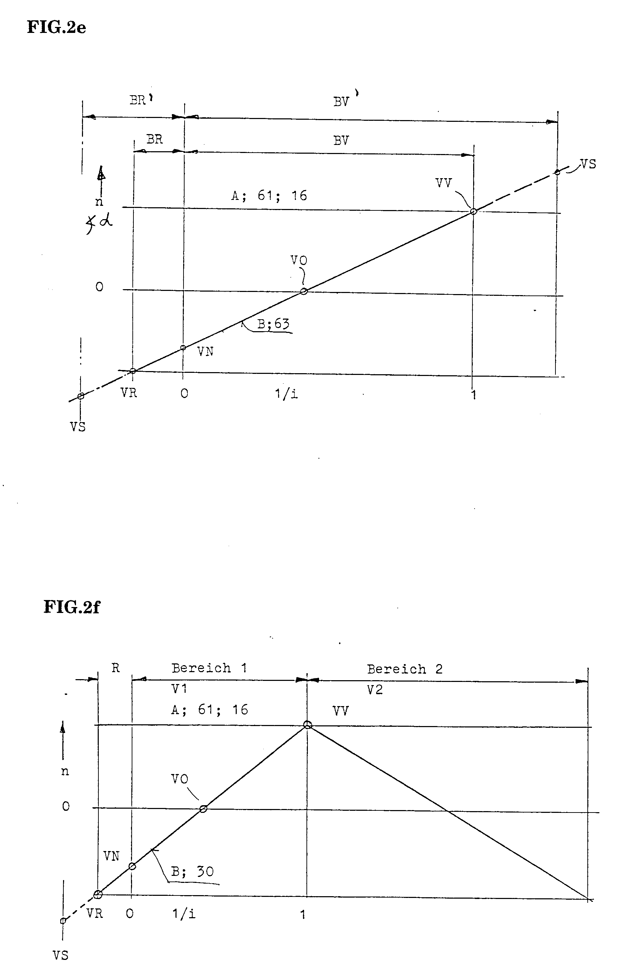

Die Getriebeausführung nach Figur 1 zeigt ein hydrostatisch-mechanisches Leistungsverzweigungsgetriebe, insbesondere für frontgetriebene Fahrzeuge in Querbauweise mit einem integrierten Achs-Differential 15. Der Aufbau des Getriebes ist derart, daß auf der Zentralwelle, die die Antriebswelle 16 bildet, das Hydrostatgetriebe 36, das insbesondere als Kompaktgetriebe ausgebildet ist und eine Verstell-Einheit A und bevorzugt eine Konstant-oder Verstelleinheit B besitzt. Dem Hydrostatgetriebe 36 ist ein Summierungsgetriebe 37 zu- bzw. nachgeordnet, daß die hydraulische und die mechanische Leistung aufsummiert. Dem SummierungsPlanetengetriebe 37 sind wenigstens zwei Kupplungen K1 und K2 zugeordnet, die abwechselnd die im Summierungs-Planetengetriebe 37 aufsummierte Leistung über ein Abtriebsrad 10 einem weiteren Triebrad 11 und einer Zwischenwelle 12 zum Achs-Differentialgetriebe 15 leiten. Das Hydrostatgetriebe 36, das Summierungsplanetengetriebe 37 sowie das Kupplungspaket 43 und das Abtriebsrad 10 sind in aufgezählter Reihenfolge hintereinander angeordnet. Das Getriebe besitzt vorzugsweise zwei Schaltkupplungen K1 und K2, die übereinander in kurzbauender Weise angeordnet sind, wobei die Kupplungen selbst bevorzugt als formschlüssige Kupplungen schleppverlustfrei ausgebildet sind. Ein gemeinsames mit der Abtriebswelle 10 in Triebverbindung stehendes Kupplungsglied 44 ist mit der Abtriebswelle 10 in ständiger Triebverbindung. Im Hinblick auf eine kurze Bauweise ist die frontseitige bzw. eingangsseitige Gebäuse-Öffnung 20 durch einen Frontdeckel 19 bzw. 38 abgeschlossen, der bevorzugt als Blechprägeteil ausgebildet ist und geräuschisolierende Wirkung dadurch hat, daß die vom Hydrostatgetriebe 36 ausgehende Geräuschabstrahlung nach außen, insbesondere zur Antriebsseite hin, abgeschirmt wird. Eine direkte Verbindung bzw. Berührung des Frontdeckels 19 bzw. 38 mit dem Hydrostatgetriebe wird erfindungsgemäß vermieden. Dieser Frontdeckel 19 bzw. 38 ist bevorzugt aus geräuschdämmendem Material bzw. aus einem Anti-dröhn-Blech oder einem sogenannten Sandwich-Blech hergestellt. Die in den Figuren 1 und 2 dargestellte Art des Frontdeckels 19 bzw. 38 beansprucht sehr geringen, sich auf die Getriebelänge auswirkenden Bauraum. Der Wellen-Dichtring 40 ist vorteilhaft im genannten Frontdeckel 19; 38 berührungsfrei mit dem Hydrostatgetriebe 36 eingesetzt. Gemäß Ausführung Figur 1 wird der beschriebene Frontdeckel 19 in einem zusätzlichen Gehäusedeckel 2 gehalten, der gleichzeitig als Lagerelement 51 für die Lagerung des Hydrostatgetriebes 36 gegenüber dem Hauptgehäuse 1 dient. Gemäß Ausführung Figur 1 ist das Hydrostatgetriebe 36 an zwei Stellen, Lagerstelle 51 und Lagerstelle 42, gegenüber dem Gehäuse 1 gelagert, wobei geräuschmindernde Elemente 50 und 41 zwischengelagert sind. Zur Aufnahme des Reaktionsmomentes des Hydrostatgetriebes 36 dienen zwischen Mitnehmerflächen zwischengelagerte, bevorzugt elastische bzw. geräuschmindernde Stützelemente 8 bzw. 9. Gemäß Ausführung Figur 2 ist das Hydrostatgetriebe 36 ebenfalls an zwei Stellen gelagert, wobei eine Lagerstelle 42 gegenüber dem Gehäuse 1 dient und die zweite Lagerstelle ohne direkter Lagerung am Gehäuse über die Antriebswelle bzw. Zentralwelle 16 erfolgt durch ein eingangsseitiges Zentral-Lager, das bevorzugt als Wälzlager 39 direkt auf der Antriebswelle sitzt. Der Frontdeckel 38, der als Abschlußdeckel und zur Geräuschisolierung bzw. Geräuschdämmung der Getriebe-Innengeräusche dient, ist gemäß Figur 2 direkt am Getriebegehäuse 1 verbunden. Zur weiteren Schwingungs- und Geräuschminderung ist vorgesehen, ein elastisches bzw. geräuschdämmendes Element 2 zwischen Gehäuse und dem Frontdeckel 38 dazwischen zu setzen, das auch gleichzeitig als Abdichtung dienen kann. Zur axialen Fixierung des Hydrostatgetriebes 36 kann eine eigene Einrichtung oder eines oder beide der geräuschisolierenden Lagerelemente 50 bzw. 41 dienen. Bei Ausführung mit einfacher Hydrostat-Lagerung kann gemäß Figur 2 vorzugsweise eine Einrichtung zur Axial-Fixierung an der Lagerstelle 42 vorgesehen werden. Auch ist es sinnvoll, das Hydrostatgetriebe 36 durch eine Axial-Fixierung 51 gegenüber dem Frontdeckel 38 zu verwenden, wobei bevorzugt die Radial-Ablagerung des Hydrostatgetriebes im Frontbereich gegenüber dem Gehäuse frei bleibt. Sie wird hier bevorzugt über eine Lagerung 84 an der Abtriebs- bzw. Kurbelwelle 60 des Antriebsmotors oder/und dem auf der Getriebeantriebswelle 16 sitzende frontseitige Zentral-Lager 39 übernommen , das z.B. im Hydrostatgehäuse eingebaut ist. Die Axialfixierung erfolgt vorzugsweise über einen, z.B. als Reibring 51 ausgebildeten Zwischenring, der besonders als Reib-Dämpfelement wirksam ist und z.B. aus Schrägverzahnung resultierende Axialkräfte aufnimmt.

Die Ölversorgung für das Hydrostatgetriebe oder/und die Steuer- und Regeleinrichtung oder/und die Kupplungssteuerung und Schmierung erfolgt, bevorzugt bei extremen Raumverhältnissen, aus der externen Zentral-Hydraulik des Fahrzeugs, wodurch die Baulänge des Getriebes gemäß bestimmten Fahrzeugforderungen auf ein Mindestmaß gesenkt werden kann. Für den Fall, daß keine externe Hydraulikversorgung möglich ist oder die Gesamt-Baulänge des Getriebes es zuläßt, ist es möglich, die Speisepumpe 49 am Getriebe-Ende, bevorzugt als außen anbaubare Pumpeneinheit, einzusetzen, die direkt oder indirekt über die Antriebswelle 16 angetrieben werden kann. Im Hinblick auf kurze Bauweise ist das Abtriebsrad 10 durch ein Hauptlager 27 und ein zweites Lager 45 auf einem mit dem Gehäuse 1 verbundenen Lagerträger 46 gelagert. Das zweite Lager 45 ist bevorzugt ein Nadellager, das im Bereich des Kupplungspaketes 43 nicht baulängenbestimmend angeordnet werden kann. Das Hauptlager 27 ist bevorzugt unmittelbar im Innern des Zahnrades 10 angeordnet, so daß keine Baulängen-Beeinflußung besteht. Dieses Hauptlager 27 ist vorzugsweise als Festlager ausgebildet, das die, insbesondere aus der Schrägverzahnung resultierenden Axialkräfte, aufnimmt. Es kann bevorzugt als Zylinder-Rollenlager derart gestaltet werden, daß im Abtriebsrad 10 und im Lagerträger 46 die Rollenbahn eingebracht sind. Zur Aufnahme der Axialkräfte kann aber auch ein spezielles, nicht dargestelltes Axiallager vorgesehen sein, so daß das Hauptlager 27 auch als Loslager ausführbar ist. Als Hauptlager 27 kann auch ein, als selbständiges, nicht dargestelltes Vierpunkt-Lager oder ähnliches dienen, wodurch das zweite Lager 45 entfallen kann. Vorteilhaft hinsichtlich Kosten und Bauraum ist auch die Ausbildung des Lagerträgers 46 als Ölführungs-Körper, der die Zuflußleitung für das Steuer-Öl der Bereichskupplungen K1 und K2 beinhaltet. Die Ölleitungen sind bevorzugt hinsichtlich Senkung der Kosten und weiteren Vorteilen in Form von eingegossenen Rohren 28 oder entsprechend ausgebildeten Ölleitungen dargestellt. Der Lagerträger 46 wird über eine Verschraubung 32, entweder von der Gehäuse-Innenseite her oder in nicht dargestellter Form von der Gehäuse-Außenseite her mit dem Gehäuse 1 verbunden. Der Lagerträger 46 ist je nach Getriebeausführung am Getriebeeingang gem Fig. 1a; 2c; 2d am Gehäuse 1 oder am Frontdeckel 19 befestigt oder am gegenüberliegenden Gehäuseende, wie in Fig. 1 dargestellt, im Gehäuseinneren oder von außen her angebracht.

Die Triebverbindung vom Abtriebsrad 10 zum Differential 15 erfolgt über eine Zwischenwelle 12, die über Zahnräder 11, 13 und 14 die Triebverbindung herstellen. Für die Montage der Zwischenwelle 12 und dem mit dem Abtriebsrad 10 kämmenden Zahnrad 11 ist eine Gehäuse-Öffnung 21 vorgesehen, die über den zweiten Gehäuse-Deckel 3, der vorzugsweise das Lager 24 trägt, verschlossen. Die Lagereinstellung der Wälzlager bzw. Kegel-Rollenlager 24 und 25 der Zwischenwelle 12 erfolgt auf einfache und zeitsparende Weise über eine Ausgleichsscheibe 26.

Die dargestellte Bauweise und Anordnung der einzelnen Getriebe-Komponenten erlaubt es, das Gehäuse einteilig auszubilden, so daß kostenintensive Trennfugen entfallen können. Die auf der Zentralachse bzw. Antriebswelle 16 angeordneten beschriebenen Getriebe-Komponenten sind von der frontseitigen Gehäuse-Öffnung 20 einmontierbar. Die Zwischenwelle 12 sowie die Lagerungen 24 und 25 mit dem dazugehörigen Zahnrad 11 können durch die Gehäuse-Öffnung 21 auf sehr einfache Weise einmontiert werden. Das Differential-Getriebe 15 ist durch eine dritte Gehäuse-Öffnung 22 montierbar, die durch einen entsprechenden, bevorzugt als Blechdeckel ausgebildeten Gehäuse-Deckel 23, verschließbar ist. Das Gehäuse selbst ist formtechnisch einfach und kostengünstig herstellbar.

Das dargestellte System der hydrostatischen Leistungsverzweigung beruht darauf, daß, wie bereits beschrieben, zwei Schaltbereiche schaltbar sind über Kupplung 1 und Kupplung 2, wobei im ersten Schaltbereich auch der Rückwärtsbereich mitenthalten ist, wie aus Drehzahlplan Fig. 2f ersichtlich. Beide Schaltbereiche arbeiten mit Leistungsverzweigung. Die Antriebswelle 16 ist mit der ersten Hydrostateinheit A und einem Glied des Summierungsplanetengetriebes (dem Hohlrad 29) verbunden. Die zweite Hydrostateinheit B steht in Triebverbindung mit einem zweiten Hohlrad 30 des Summierungs-planetengetriebes. Auf dem Steg 32 des Summierungsplaneten-getriebes sind erste Planetenräder 33 und zweite Planetenräder 34 gelagert, die gegenseitig in Zahneingriff stehen. Mit dem ersten Hohlrad 29 kämmen die ersten Planetenräder 33, mit dem zweiten Hohlrad 30 die zweiten Planetenräder 34. Ein Sonnenrad 31 steht in Zahneingriff mit den zweiten Planetenrädern 34. Im ersten Schaltbereich ist der Steg 32 über eine Kupplung K1 mit der Abtriebswelle bzw. dem Abtriebsrad 10 verbindbar. Das Sonnenrad 31 ist im zweiten Schaltbereich über die Kupplung K2 mit der Abtriebswelle bzw. dem Abtriebsrad 10 kuppelbar.

Der Funktionsablauf stellt sich, wie in Drehzahlplan gem. Fig. 2f bzw. 2e aufgezeigt, derart dar, daß im Anfahrzustand das Hydrostatgetriebe auf eine gewisse negative Drehzahl für die zweite Hydrostateinheit B eingestellt ist, was einer gewissen Verstellgröße - Anfahr-Stellgröße von z.B. 60 % - entspricht. Beim Anfahren wird bei geschlossener Kupplung K 1 die im Summierungs-Planetengetriebe aufsummierte Leistung über den Steg 32 auf den Abtrieb übertragen, wobei durch Drehzahl-Rücknahme aus vorgenannter Hydrostat-Einstellung VN entsprechend Anfahr, Stellgröße eine Abtriebsdrehzahl der Stegwelle 32 aus Null erzeugt wird. Bei Durchregelung des Hydrostatgetriebes auf die Gegendrehrichtung, bevorzugt bis Einstellung VV einer bestimmten Maximal-Verstellung wird Synchronlauf bei den Kupplungsgliedern K2 bei gleichzeitigem Blockumlauf aller Glieder des Summierungs-Planetengetriebes erzielt. Nach Schalten der zweiten Bereichskupplung K2 und Öffnen der ersten Bereichskupplung K1 wird der Hydrostat in die Gegenrichtung verstellt, wobei am Ende der Hydrostat-Verstellung in die genannte Gegenrichtung der Übersetzungs-Endpunkt des Getriebes erreicht ist. Für den Rückwärtsbereich wird die Hydrostat-Verstellung aus der vorgenannten Fahrzeug-Stillstands-Stellung VN - Anfahr-Stellgröße - weiter in die negative Verstellrichtung eingeregelt, wobei die maximale Rückfahr-Geschwindigkeit bzw. die Übersetzungs-Endstellung des Rückwärtsbereiches am Ende der negativen Hydrostatverstellung erreicht ist.

Bei dieser Getriebeausführung ist es möglich, insbesondere bei Anwendung von Klauenkupplungen, mit oder ohne Abweisverzahnung, wie z.B. aus EP 0 276 255 und EP 0 343 197 bekannt eine kurze Bauweise zu erzielen, wobei vorteilhaft die beiden Kupplungen K1 und K2 übereinander angeordnet sind.

In einer weiteren, nicht dargestellten Ausführungsform sind die Schaltkupplungen K1 und K2 dem Summierungs-Planetengetriebe vorgeschaltet, wobei das Abtriebsrad 10 direkt mit einem Glied des Summierungs-Planetengetriebes verbunden ist. Bei dieser Konfiguration wird bevorzugt die zweite Hydrostateinheit B wechselweise mit einer von zwei Eingangswellen des nicht dargestellten Summierungsplanetengetriebes verbunden.

In Figur 2a ist ein hydrostatisch-mechanisches Leistungsverzweigungsgetriebe als Einbereichsgetriebe dargestellt. Gemäß der Erfindung besitzt dieses Getriebe ein Hydrostatgetriebe 36, das bevorzugt als Kompaktgetriebe ausgebildet ist und eine erste Hydrostateinheit A verstellbaren Volumens und eine zweite Hydrostateinheit B konstanten oder verstellbaren Volumens besitzt, dem ein dreiwelliges Summierungs-Planetengetriebe 37a zugeordnet ist, dessen erste Welle 61 mit der Antriebswelle 16 und der ersten Hydrostateinheit A und dessen zweite Welle 63 mit der zweiten Hydrostateinheit B verbunden ist und dessen dritte Welle 62 über einen Triebstrang 10, 11, 12, 13, 14 mit der Abtriebswelle 64, 65 bzw. dem Differential 15 in Triebverbindung steht, wobei das Summierungsplanetengetriebe 37a koaxial zum Hydrostatgetriebe 36 angeordnet ist. Auch das Summierungs-Planetengetriebe 37a ist bei dieser Getriebeausführung dem Hydrostatgetriebe 36 räumlich nachgeordnet und zwar in der Reihenfolge: Antriebsmotor, Hydrostatgetriebe 36, Summierungs-Planetengetriebe 37a. Das Differentialgetriebe 15 sowie eine zum Abtriebsstrang gehörende Zwischenwelle 12 sind parallel versetzt zur Eingangswelle 16 und dem Hydrostatgetriebe 36 angeordnet.

In einer weiteren Ausführungsform gemäß Figur 2c und 2d sieht die Erfindung vor, das Summierungs-Planetengetriebe 37a; 37 zwischen Antriebsmotor und dem Hydrostatgetriebe 36 zu plazieren. Dies hat den Vorteil, daß die Zwischenwelle 12 entfallen kann und statt dessen ein kostengünstigeres Zwischenrad 13a verwendet wird, das die Triebverbindung zwischen der dritten Welle 62 des Summierungs-Planetengetriebes über weitere Zahnräder 10 und 14 mit dem Differential herstellt. Bei dieser Ausführungsform gemäß Figur 2c; 2d wird die Antriebswelle 16 eingangsseitig durch das Abtriebsrad 10 bzw. das Abtriebsglied und die zweite Hydrostateinheit B hindurchgeführt und mit der ersten Welle 61; 29 des Summierungs-Planetengetriebes 37a; 37 und mit der der Hydrostateinheit B räumlich nachgeordneten Hydrostateinheit A verbunden.

Ähnlich der Bauweise gem. Fig. 2c, 2d ist auch das Zweibereichs-Getriebe-System, wie in Figur 1a dargestellt, ausführbar. Hier wird die Antriebswelle 16 durch das Abtriebsglied bzw. durch die Abtriebswelle 10, die Kupplung K2 und durch das Sonnenrad 31 geführt und mit der ersten Welle 29 des Summierungs-Planetengetriebes 37 sowie der ersten Hydrostateinheit A, die bei dieser Bauweise der zweiten Hydrostateinheit B räumlich nachgeordnet ist, verbunden.

Das dreiwellige Summierungs-Planetengetriebe 37a besitzt vorzugsweise ein Sonnenrad 61, ein Hohlrad 63 und eine Stegwelle 62, wobei das Sonnenrad 61 als erste Welle mit der Antriebswelle 16 und der ersten Hydrostateinheit A, das Hohlrad 63 als zweite Welle mit der zweiten Hydrostateinheit B und der Steg 62 als dritte Welle mit dem Abtriebsglied 10 verbunden ist.

In einer weiteren, nicht dargestellten Ausführungsform kann das dreiwellige Summierungs-Planetengetriebe auch mit zwei Hohlrädern und einer Stegwelle, ähnlich dem Summierungs-Planetengetriebe 37 gem. Fig. 2b ausgebildet werden. Hierbei ist das erste Hohlrad 29 mit dem Antrieb 16 und der ersten Hydrostateinheit A, das zweite Hohlrad 30 mit der zweiten Hydrostateinheit B und die Stegwelle 32 mit dem Abtriebsglied 10 verbunden, wobei auf der Stegwelle 32 ineinandergreifende Planetenräder 33 und 34 angeordnet sind, die ihrerseits mit den Hohlrädern 29 und 30 kämmen. Welche Ausführungsform zu bevorzugen ist, entscheidet die jeweils erforderliche Standübersetzung des Planetengetriebes oder/und die räumlichen und baulichen Verhältnisse. Beide Planetengetriebe-Ausführungen sind funktionsgleich.

Der Funtionsablauf der Einbereichs-Getriebeausführung, gemäß Figur 2a; 2c bzw. 2d, ist gleich dem ersten Schaltbereich des Zweibereichs-Getriebes gemäß Figur 1; 1a bzw. 2b, wie an anderer Stelle und in den Patentansprüchen näher beschrieben und in den Drehzahlplänen Fig. 2e und 2f dargestellt. Bei dieser Ausführung ist die zweite Hydrostateinheit B vorteilhaft mit Sekundärregelung ausgestattet, bevorzugt für einen Overdrive-Bereich.

Zur Wirkungsgradverbesserung sieht die Erfindung eine für alle Getriebeausführungen bzw. bei allen Leistungs-Verzweigungsgetrieben anwendbare Einrichtung zur Überbrückung bzw. Lastlossetzung des Hydrostatgetriebes 36 an einem oder mehreren Übersetzungspunkten vor.Der jeweilige Übersetzungspunkt wird hier festgehalten so lange es die Betriebssituation zuläßt. Dieser Zustand wird als ,,Festpunkt-Schaltung" bezeichnet und wird in der EP 0 599 263, der DE 43 39 864 oder der DE 44 17 335 näher beschrieben. Bei Getriebeausführung nach dem Einbereichssystem gemäß Fig. 2a; 2c; 2d wird bei Endübersetzung ein rein-mechanischer Betrieb realisiert, dadurch, daß der Abtrieb 10 über eine Kupplung 67; 68 direkt mit dem Antrieb bzw. der Antriebswelle 16 verbunden wird. Bei Schließen der betreffenden Kupplung 67; 68 wird eine Blockschaltung des Summierungs-Planetengetriebes 37a bewirkt, so daß die Leistungsübertragung rein über die Antriebswelle 16 direkt oder indirekt auf den Abtrieb 10 bei Blockumlauf des Summierungs-Planetengetriebes erfolgen kann. Das Hydrostatgetriebe wird in diesem Schaltzustand drehmomentfrei bzw. differenzdruckfrei gesetzt, derart daß die Hydrostatverstellung automatisch entsprechend eingeregelt wird oder daß ein Bypaßventil (nicht dargestellt) zwischen den beiden Arbeitsdruckleitungen bzw. dem Hydrostatkreislauf geschaltet ist, das einen Kurzschluß zwischen den genannten Leitungen nach entsprechender Ansteuerung herstellt. Bei hydrostatisch leistungslosen Betriebszuständen, das heißt bei Verstellgröße "Null" bzw. Verdrängungsvolumen "Null" sieht die Erfindung desweiteren eine Kupplung bzw. Bremse 69 vor, die die zweite Hydrostateinheit B mit dem Gehäuse verbindet, so daß das Stützmoment am Gehäuse abgefangen und das Hydrostatgetriebe nicht mit unnötigem Leistungsverlust belastet wird.

Um stoßfreie Schaltungen bei Hydrostat-Überbrückung zu erzielen, sieht die Erfindung desweiteren vor, daß der Einschaltvorgang vorzugsweise immer im Synchronzustand der betreffenden Kupplungsglieder erfolgt, wobei der Synchronzustand bzw. das Synchron- oder/und Schaltsignal aus einem Drehzahlvergleich von wenigstens zwei Getriebegliedern auf bekannte Art, z.B. über Drehzahlsensoren, erfolgt. Auch der Ausschaltvorgang ist so gestaltet, daß die betreffende Kupplung 67; 68; 69 vor Einleitung des Öffnungssignals in drehmomentfreien Zustand gesetzt wird. Dies erfolgt auf die Weise, daß das Hydrostatgetriebe automatisch zunächst den lastlosen Zustand der Kupplung herstellt durch entsprechende lastabhängige Korrektur der Hydrostat-Verstelleinrichtung auf ein entsprechend angepaßtes neues Verdrängungsvolumen Vneu , das in Abhängigkeit zum Lastzustand eingeregelt wird. Die lastabhängige Verstellkorrektur erfolgt insbesondere aus lastabhängigen Betriebswerten von Motor oder/und Getriebe. Dazu können ein oder mehrere Betriebssignale bzw. Betriebsgrößen wie Drosselklappenstellung, Gaspedal- Fahrpedalstellung, Fahrpedalveränderungsgeschwindigkeit, Motoransteuersignal in Verbindung mit der momentanen Motordrehzahl, Bremssignal, äußere Betriebseinflüsse, Temperatur, Luftdruck u.a. sein, die zur Ermittlung bzw. Berechnung des jeweiligen Lastzustandes oder Lastmomentes geeignet sind. Aus vorgenannten Betriebsgrößen bzw. Betriebssignalen kann in der Regeleinrichtung bzw. in der Elektronik das momentane Motordrehmoment bzw. der momentane Lastzustand ermittelt bzw. errechnet werden, woraus die jeweils erforderliche Verstellkorrektur bzw. das jeweils erforderliche neue Verdrängungsvolumen Vneu bestimmt wird, um automatisch das Öffnungssignal für die betreffende Kupplung bzw. das Verlassen des hydrostatüberbrückenden Schaltzustandes (Festpunkt-Schaltung) schaltstoßfrei zu aktivieren. Zur Ermittlung des Drehmomentes bzw. des momentanen Lastzustandes und des neuen Verstell- bzw. Verdrängungsvolumens Vneu sind in vielen Anwendungsfällen nur zwei Größen wie Gas-bzw. Fahrpedalstellung bzw. Drosselklappenstellung bzw. Motoransteuer-Signal und Motordrehzahl n mot ausreichend für akzeptable Schaltqualität.

Der aufgezeigte Schaltablauf kann auch für die übliche Bereichsschaltung von einem in den anderen Schaltbereich, z.B. von Bereich 1 in Bereich 2 oder umgekehrt mit gleicher Signal-Verarbeitung in der Steuerung/Regelung angewandt werden. Bei Schubbetrieb erkennt das System das Schubverhalten und das Schubmoment und -momentgröße aus der angehobenen Motordrehzahl und gegebenenfalls Gaspedalstellung bzw. Drosselklappen-Stellung bzw. Motoransteuergröße, wobei bei Schubbetrieb sinngemäß eine Umkehrung der Verstellkorrektur-Richtung berücksichtigt wird.

In Verbindung mit dem beschriebenen, nicht dargestellten Bypaßventil ist es gemäß der Erfindung möglich, eine ständige Hydrostat-Verstellkorrektur in Abhängigkeit zum genannten jeweiligen Betriebszustand innerhalb der geschalteten Hydrostat-Überbrückungsphase bei lastlosem Hydrostat zu realisieren, so daß bei Verlassen dieses Zustandes spontan die richtige Verstellgröße bzw. das richtige Verdrängungsvolumen Vneu bereitsteht, so daß ein spontaner schaltstoßfreier Schaltablauf in den neuen stufenlosen Bereich sichergestellt ist. Bei dieser Funktionsweise wird vor Verlassen dieser Schaltstellung zuerst das Bypaßventil geschlossen und in der Folge das Öffnungssignal für die alte Kupplung K1 bzw. K2 bzw. die Überbrückungskupplung 67; 68; 69 aktiviert.

Die Erfindung sieht eine Schaltautomatik für die Festpunktschaltung 67; 68; 69 vor, die wirkungsgrad-orientiert den nächstliegenden Übersetzungsfestpunkt ansteuert unter Abwägung der jeweils günstigsten Verbrauchsverhältnisse unter Einbeziehung des jeweiligen Motor-Wirkungsgrades und Getriebe-Wirkungsgrades. Zu diesem Zweck sind verbrauchs-orientierte Werte des Antriebsmotors und Wirkungsgradwerte bzw. wirkungsgrad-bestimmende Daten des Getriebes gespeichert, wobei in der Nähe eines Übersetzungs-Festpunktes unter Zuhilfenahme vorgenannter Motor- und Getriebedaten der jeweils verbrauchsgünstigste Betriebszustand ermittelt und gegebenenfalls automatisch durch entsprechende Anpassung der Motordrehzahl und der Getriebe-Übersetzung der betreffende Übersetzungsfestpunkt durch Schließen einer der Kupplungen 67; 68; 69; K1 und K2. Auch das Verlassen des Übersetzungsfestpunktes wird durch einen mehr oder weniger genauen Rechenprozeß nach gleichen Kriterien in der Regeleinrichtung ermittelt und aktiviert.

Die Hydrostat-Überbrückungseinrichtungen 67; 68; 69 können sehr kostengünstig als formschlüssige Kupplungen mit spanlos herstellbaren Kupplungsverzahnungen, wie in der EP 0276 255 näher beschrieben,oder als Reibkupplungen, bevorzugt als Konuskupplung, wie in DE 41 26 650 beschrieben, ausgeführt werden.

Der Drehzahlplan gem. Fig. 2e stellt den Drehzahlverlauf der zweiten Hydrostat-Einheit B und der zweiten Welle 63 des Summierungsplanetengetriebes 37a für das EinbereichsGetriebe nach Fig. 2a, 2c und 2d dar. Ist die zweite Hydrostat-Einheit B als Verstelleinheit ausgebildet, ist es möglich, den Gesamt-Übersetzungsbereich sowohl für Vorwärts- als auch Rückwärtsbetrieb zu vergrößern durch Verringerung dessen Verstell-Volumens, wobei der Vorwärts-Fahrbereich die Größe BV' und der Rückwärtsbereich die Größe BR' erhält. Figur 2f zeigt den Drehzahlverlauf der zweiten Hydrostateinheit B bzw. der zweiten Welle 30 des Summierungs-Planetengetriebes 37 des an früherer Stelle beschriebenen Zweibereichs-Getriebes gem. Fig. 1; 1a; 2b; 3.

Sehr vorteilhaft ist gemäß dieser Erfindung eine weitere, zusätzliche Einrichtung, bei der das Hydrostatgetriebe 36 in Verbindung mit der beschriebenen Festpunkt-Schaltung bzw. Hydrostat-Überbrückungseinrichtung als Brems-Retarder genutzt werden kann. In vorgenannten Druckschriften EP 0 599 263 und DE 44 17 335 ist diese Einrichtung näher beschrieben.

Auch die Möglichkeit einer Bremsenergie-Rückgewinnung oder/und Energie-Speicherung ist vorgesehen und in vorgenannten, bekannten Druckschriften näher erläutert.

Zur Senkung der Geräuschemission ist das Hydrostatgetriebe 36 auch in der Getriebeausführung gem. Fig. 2c und 2d gegenüber dem Gehäuse 1 elastisch bzw. geräuschisolierend gelagert, wozu elastische Lagerelemente 50, 51 für die radiale Ablagerung und für die Drehmoment-Mitnahme ein oder mehrere drehmoment-abstützende, geräusch- und schwingungsisolierende Elemente oder Drehmoment-Stützkörper dienen. Für die radiale, axiale und Drehmomentabstützung kann ein gemeinsamer Körper 41 dienen, der in entsprechende Ausnehmungen 8 des Hydrostatgetriebes und des Gehäuses eingelagert ist, Verwendung finden. Eine genaue radiale Fixierung des Hydrostatgetriebes ist gewährleistet, indem die entsprechenden radialen Lagerflächen des Hydrostatgetriebes und des Gehäuses bearbeitet und die Taschen bzw. Ausnehmungen 8 zwischen Gehäuse und Hydrostatgetriebe nicht bearbeitete, gegebenenfalls eingegossene oder eingeprägte Ausnehmungen sein können.

Das Getriebe gem. Fig. 2a, 2b, 2c, 2d ist auch für Allradantrieb geeignet, wobei der Einbau in Längsbauweise erfolgt und die eine Abtriebswelle 64 z. B. für den Frontantrieb und die andere Abtriebswelle 65 beispielsweise für den Heckantrieb dient, wobei das Differential 15 als Längsdifferential, gegebenenfalls mit Differentialsperre 66 dienen kann.

Die gemäß der Erfindung aufgezeigten Getriebeausführungen zeichnen sich durch folgende Vorteile aus: kurze Bauweise, kleiner Bauraum, geringe Anzahl an Bauteilen, guter Getriebe-Wirkungsgrad, da überwiegender Betrieb - ca. 85 % Betriebsanteil -mit Hydrostat-Überbrückung, geringer Kraftstoffverbrauch, insbesondere durch Ausnutzbarkeit eines großen Overdrive-Bereiches, Senkung der Geräuschemission durch spezielle Extra-Kapselung des im Hauptgehäuse 1 gelagerten Hydrostatgetriebes 36 und Anwendung spezieller, vorgenannter geräuschisolierender Zwischenelemente 50, 51, 41, 8 und 9.

Der gesamte Getriebe-Aufbau kann auch für ein Leistungs-verzweigungsgetriebe mit mehr als zwei Schaltbereichen realisiert werden, wobei mehr als zwei Schaltkupplungen für mehr als zwei Schaltbereiche schaltbar sind. Die jeweilige Begrenzung liegt im Bauraumangebot bzw. ist abhängig von der zur Verfügung stehenden Einbaulänge für das Getriebe des jeweiligen Fahrzeugs.

Für Allradantrieb ist das Getriebe sehr vorteilhaft mit einer Abtriebswelle 55 auszubilden, die die Triebverbindung zur Hinterachse herstellt. Zu diesem Zweck dient ein Kegeltrieb 59, der in Triebverbindung mit einem Abtriebsglied 14 gebracht wird. Ein Kegelrad 53 ist vorteilhaft direkt mit dem Differential-Antriebsrad 14 verbunden, daß das abtreibende Kegelrad 54 und die entsprechende Abtriebswelle 55 antreibt. Der Kegeltrieb 59 kann hier sehr vorteilhaft in das Getriebegehäuse 1 eingesetzt werden.

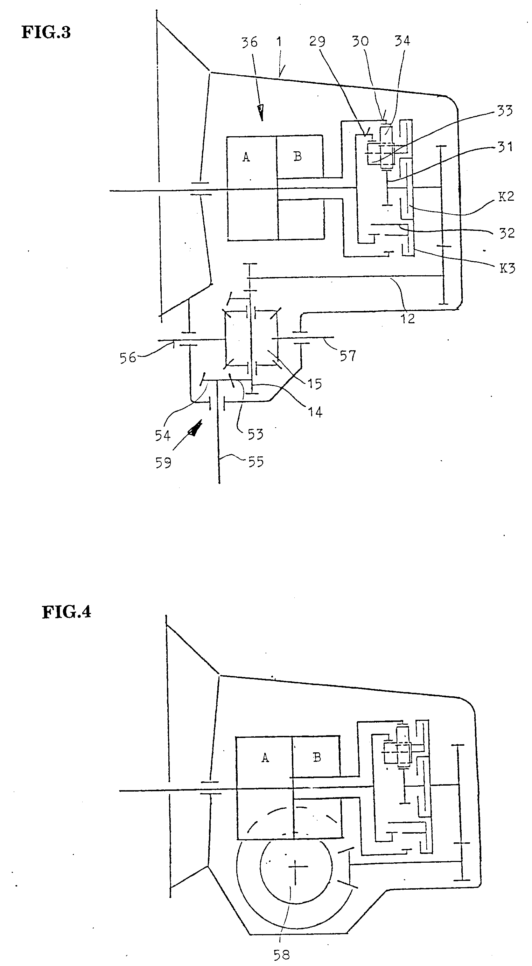

Getriebe-Ausführung gemäß Fig. 4 sieht ein quer zur Antriebswelle liegendes AchsDifferential 58 vor, das für ein frontgetriebenes Fahrzeug mit längseingebautem Motor geeignet ist. Auch für diese Bauweise ist das Getriebe-Gehäuse 1 einteilig ausgebildet, wie bei vorbeschriebenen Getriebe-Ausführungen zutreffend.

Die Erfindung sieht desweiteren eine, auch für andere Leistungsverzweigungsgetriebe anwendbare Einrichtung zur Optimierung der Schaltqualität, insbesondere für die Bereichsschaltungen vom einem in den anderen Schaltbereich vor. Wie in der bekannten Druckschrift EP 0 599 263 A2 näher beschrieben und Mitbestandteil dieser Erfindung ist, wird innerhalb der Schaltphase nach Schließen der neuen Kupplung und nach geschlossener alter Kupplung eine Verstellkorrektur des Hydrostatgetriebes vorgenommen. Diese Schaltkorrektur-Einrichtung ist für alle Leistungsverzweiungsgetriebe, insbesondere hydrostatisch-mechanische Leistungsverzweigungsgetriebe mit zwei oder mehreren Schaltbereichen anwendbar.

Die Verstellkorrektur zur Schaltoptimierung wird bevorzugt über Betriebswerte des Antriebsmotors M gesteuert/geregelt. Bestimmend für die Größe der Verstellkorrektur X; Y; Z ist das jeweilige bzw. momentane Antriebs-drehmoment Tan des Getriebes bzw. das Motordrehmoment Tmot . Der Schließ-vorgang der neuen Kupplung nach Ende des alten Schaltbereiches erfolgt im Synchronzustand der Kupplungsglieder der neuen Kupplung in bekannter Weise, wobei bevorzugt zwei oder mehrere Drehzahlsensoren durch Vergleich der Drehzahlen von wenigstens zwei Getriebegliedern den Synchronzustand ermitteln und den Schaltimpuls für die neue Kupplung auslösen. Das momentane Antriebsdrehmoment des Getriebes bzw. Motordrehmoment Tan bestimmt die Belastungsgröße des Hydrostatgetriebes und den entsprechenden Drehzahlschlupf von Hydromotor/ - pumpe und somit auch die Größe der jeweils erforderlichen Verstellkorrektur innerhalb beider geschlossener Kupplungen. Jedem Antriebsdrehmoment ist somit auch eine bestimmte Verstellgröße bzw. Verdrängungsvolumen Vneu bzw. Verstellkorrekturgröße Z; tk zugeordnet, die dem drehmomentfreien Zustand der alten Kupplung entspricht, wonach das Öffnungssingal für diese Kupplung ausgelöst wird. Drehmomentveränderungen innerhalb der Schaltphase, wobei beide Kupplungen geschlossen sind, werden bei dieser Korrektur-Einrichtung automatisch berücksichtigt, da immer das momentane Antriebsdrehmoment Tan bzw. Motordrehmoment Tmot das Öffnungssignal der alten Kupplung bestimmt bzw. über entsprechende, daraus resultierende Signale zum Öffnen der alten Kupplung auslöst. Unabhängig davon, ob es sich um eine Zughochschaltung, Zugrückschaltung, Schubhochschaltung oder Schubrückschaltung handelt, erkennt das System den jeweils günstigsten Öffnungspunkt bzw. das neue Verstellvolumen Vneu zum Auslösen des Öffnungssignals der alten Kupplung. Die Erkennung in der Regeleinrichtung, ob Schub- oder Zugbetrieb erfolgt durch Motorkenngrößen bzw. -belastungsgrößen/ -signale, gegebenenfalls auch äußere Einflußgrößen, wobei bei Zugbetrieb jedem Motordrehmoment Tmot und Motordrehzahl n mot eine bestimmte Ansteuergröße wie Drosselklappenstellung; Fahr- bzw. Gaspedalstellung, Fahrpedal-Änderungsgeschwindigkeit, Temperatur, gegebenenfalls auch Luftdruck u.a. zugeordnet ist. Zum Beispiel kann bei plötzlichem Loßlassen des Gaspedals/Fahrpedals innerhalb der Schaltphase das sofortige Öffnungssignal bei Vth erteilt werden, weil das Antriebsdrehmoment bzw. das Motordrehmoment sofort auf Null abfällt oder gar negatives Drehmoment annimmt, trotzdem bei Schaltbeginn Valt und Korrekturgröße X Maximalgröße hatten.

Bei Schubbetrieb erkennt das System ebenfalls den jeweiligen Betriebszustand dadurch, daß bei Schubmoment der Motor entsprechend hochgetourt wird und je nach Drehzahlgröße entsprechend Signal b ein entsprechendes Bremsmoment bzw. negatives Motordrehmoment oder Schubmomentgröße erkannt wird und aus den entsprechenden Signalgrößen b, a bzw. Bremssignal f Drehmomentgröße Tmot ; Tan und Drehmomentrichtung ermittelt und daraus die Schalt-Korrekturgröße und -Korrektur-Richtung und Vneu zum Öffnen der alten Kupplung festlegt und signalisiert. Bei Schubbetrieb findet eine Umkehrung der Korrekturgrößen und Korrekturrichtungen statt, wobei bei Hochschaltung das Verdrängungsvolumen bzw. die Stellgröße Valt kleiner als Vneu und bei Rüchschaltung Valt größer als Vneu ist. Dies entspricht dem allgemeinen charakteristischen Schaltkorrekturverhalten bei hydrostatischmechanischen, aber auch rein-mechanischen Leistungsverzweigungs-getrieben.

Die Drehzahlschlupfgrößen des Hydrostatgetriebes können vor und nach der Bereichsschaltung bei gleichem An- und Abtriebsdrehmoment an der Bereichsschaltstelle, je nach Getriebeauslegung und Bereichsaufteilung, sehr unterschiedlich sein. Entsprechend unterschiedlich sind die Korrekturgrößen-Verhältnisse X zu Y bzw. Z . Dementsprechend sind im Steuer- und Regelungssystem die Korrekturgrößen bzw. Korrekturgrößenverhältnsse X zu Y bzw. Z einprogrammiert, d.h. es ist jedem Antriebsdrehmoment für jede Bereichsschaltstelle eine eigene Stellgröße bzw. Verdrängungsvolumengröße Vneu zugeordnet und vorprogrammiert, die in Abhängigkeit sich innerhalb der Schaltphase verändernden Lastverhältnisse und anderen Faktoren korrigierbar sind, so daß in allen Betriebszuständen eine schaltstoßfreie Bereichsschaltung gewährleistet ist.

Je nach Art der Motorregelung, ob Leistungs- oder Drehzahlregelung, z.B. RQ, RQV oder andere Regelungsart sind in der Steuer- und Regelungseinrichtung, die jeweils für die Ermittlung des Motordrehmomentes geeigneten Signalgrößen in der Fahrregelung bzw. Steuer- und Regeleinrichtung einprogrammiert. So ist z.B. bei einer RQ-Regelung jeder Drosselklappen-bzw. Fahrpedalstellung und jeweils gegebener Motordrehzahl ein bestimmtes Motordrehmoment zugeordnet, so daß Drosselklappen- bzw. Fahrpedal-Stellungssignal und Motordrehzahlsignal eine Aussage für das jeweilige Motordrehmoment geben, wonach das neue Verdrängungsvolumen bzw. die Verstellgröße Vneu ermittelt und daraus das Öffnungssignal für die alte Kupplung eingeleitet werden kann. Bei RQV-Regelung entspricht jede Gaspedal-bzw. Fahrpedalstellung einer vorgegebenen Motordrehzahlgröße unabhängig vom Motordrehmoment. Bei dieser oder ähnlicher Regelungsart ist es also erforderlich, zur Ermittlung des Motordrehmomentes ein entsprechendes Signal, das dem Füllungsgrad der Kraftstoff-Einspritzung oder einer ähnlichen Signalgröße, die für die Drehmomentermittlung geeignet ist, zu verwenden.

Bei dieser Korrektur-Variante ist es gegenüber bekannten Einrichtungen zur Schaltkorrektur nicht erforderlich, die Verstell-Korrekturgröße Z aus einem Hydrostatdrucksignal oder einer vor Schaltbeginn gegebenen Korrekturgröße X bzw. Valt zu ermitteln bzw. zu errechnen, sondern das Öffnungssignal kann immer aus dem momentan wirksamen Antriebsdrehmoment Tmot bzw. Tan ermittelt werden. Für eine genaue Realisierung und Signalgebung der neuen Stellgröße bzw. Vneu sorgt in der Regel ein entsprechender Verstellweggeber bzw. Sensor, der den Verstellwinkel oder Verstellweg des Hydrostatgetriebes signalisiert.

Für die Verstellgrößen- bzw. Verdrängungsvolumenmessung kann alternativ auch die bekannte Verstelldruck- oder elektrische Verstellstromgröße benutzt werden, sofern diese für die Ermittlung des korrekten Öffnungssignals für die alte Kupplung geeignet sind..

Ein Drucksensor zur Erfassung des jeweiligen Hydrostatdruckes ist bei dieser Korrektur-Variante nicht erforderlich.

Alle in dieser Patentanmeldung beschriebenen Schaltkorrektur-Einrichtungen sind sowohl für hydrostatisch-mechanische als auch rein-mechanische Leistungsverzweigungsgetriebe anwendbar. Bei einem mechanischen Leistungsverzweigungsgetriebe gelten für die Korrekturverhältnisse X und Y die jeweiligen Drehmomentverhältnisse am stufenlosen Wandler, wobei die Drehmomentverhältnisse gleich den Druckverhältnissen der Arbeitsdrücke des Hydrostatgetriebes entsprechen.

Die Erfindung sieht desweiteren für die Bereichsschaltungen sowohl für Hoch- als auch für Rückschaltung, Zug- oder Schubschaltung eine Schaltkorrektur-Einrichtung vor, wonach die Schaltkorrektur-Größe Z über eine Verstellkorrektur-Zeit tk ermittelt wird, wobei bevorzugt die Größe der erforderlichen Korrekturwerte X, Y bzw. Z bzw. tk aus oben genannten jeweiligen Betriebswerten wie Motordrehmoment bzw. aus den Drehmoment bestimmenden Betriebswerten ermittelt wird. Die Verstell-Korrekturzeit tk bestimmt im Schaltzeitpunkt bzw.in der Schaltphase in Abhängigkeit zur Verstell-Geschwindigkeit die Größe des KorrekturWertes bzw. -weges Z. Bestimmend dafür ist somit der Steuerstrom bzw. das Fördervolumen Qk .Der effektive Steuerstrom Qk wird durch verschiedene im Schaltzeitpunkt wirksame Größen wie Speisepumpen-Fördervolumen, Drehzahl, Steuerdruck (konstant oder variabel), innere Drosseleffekte, Öltemperatur u.a. bestimmt bzw. mitbeeinflußt. Die Größe der Verstellgeschwindigkeit bzw. des Verstellstroms Qk kann experimentell ermittelt werden in weiterer Abhängigkeit zu den verschiedenen Betriebszuständen, - Motordrehzahl, Motoransteuer-Signale wie Drosselklappenstellung, Gaspedalstellung, Öltemperatur u.a..- Aus diesen vorgenannten Werten erkennt die Regeleinrichtung bzw. die Elektronik welche Verstellkorrektur-Zeit in welchem Betriebszustand für die Ermittlung der jeweiligen Korrektur-Größe bzw. des neuen Verdrängungsvolumens Vneu erforderlich ist. Für eine genaue Ermittlung der Korrekturzeit tk wird auch die Temperatur, insbesondere Öltemperatur, Öl-Viskosität und gegebenenfalls weitere den Volumenstrom der Verstelleinrichtungen, Leckölveränderungen und die Schaltzeit beeinflussende Faktoren mit berücksichtigt durch entsprechende Signal-Verarbeitung in der Regeleinrichtung.

In der Steuer- und Regeleinrichtung bzw. Elektronik wird gemäß der Erfindung desweiteren eine automatische Änderung und Anpassung vorgegebener Werte, die insbesondere von Betriebsdauer oder/und Einsatzart abhängig sind, realisiert. Die genannte Anpassung kann auf verschiedene Weise verwirklicht werden, z.B. derart, daß Fehlfunktionen oder Störfunktionen in der Regeleinrichtung bzw. Elektronik erkannt werden, woraus z.B. ein stoßerzeugendes Signal bzw. Störsignal bewirkt, daß eine Veränderung eines oder mehrerer vorgegebener Größen oder Festwerte stattfindet, so daß trotz sich verändernder Betriebswerte, z.B. die Leckölmenge, die Korrekturgrößen tk; Z derart angepaßt werden, daß gute Schaltqualität erhalten bleibt oder diese verbessert wird. Auslösendes Signal für diese Korrektur bzw. innere Korrektur von bevorzugt vorgegebenen oder vorherrschenden Größen kann eine, insbesondere innerhalb der Schaltphase auftretende Drehmomentveränderung eines Motor- oder Getriebegliedes oder ein drehmoment- oder drehzahlveränderndes Signal oder/und Änderungsgeschwindigkeit oder/und Veränderung einer Massenkraft oder allgemein ein stoß-bzw. ruckanzeigendes Signal sein. Als geeignete Signalgröße zur Veränderung innerer Vorgabe oder Festwerte kann das Motordrehzahlsignal, insbesondere im Konstantfahrbereich, sein, wobei bei einem Verzögerungsstoß eine Motordrehzahl-Anhebung ausgelöst wird, wodurch automatisch eine entsprechend angepaßte Veränderung eines oder mehrerer der inneren Vorgabewerte oder Festwerte oder/und Signalgröße bewirkt wird, so daß in diesem Fall z.B. eine entsprechende Vergrößerung des Verstellkorrekturwertes tk bzw. Z erzielt wird. Bei einem Beschleunigungsstoß wird eine umgekehrte Veränderung vorgenannter Festwerte bewirkt. Anstelle der für die Veränderung innerer Festwerte benutzten Signale kann auch ein Signal sein, das aus der Veränderung einer oben genannten Massenkraft resultiert, wobei beispielsweise durch die Massenveränderung innerhalb des Schaltablaufes eine Entscheidung zur Verkürzung oder Verlängerung der Schaltkorrekturzeit tk oder der Verstellkorrekturgröße Z realisiert wird. Die Veränderungsgröße der inneren Festwerte hängt im wesentlichen von im Laufe der Betriebszeit sich verändernden Werten ab, die z.B. in Abhängigkeit zum Verschleiß einzelner Elemente oder/und in Abhängigkeit zu einer stark verändernden Betriebs-Charakteristik eines Fahrzeuges stehen kann. Dies bedeutet, daß zur Optimierung oder Aufrechterhaltung guter Schaltqualität die Elektronik bzw. Regeleinrichtung die Entscheidung für eine Veränderung einer oder mehrerer innerer Festwerte bevorzugt aus der Information mehrerer Schaltvorgänge trifft, um daraus den geeignetsten Änderungswert zu bestimmen.

Die Erfindung sieht desweiteren vor, daß im Hinblick auf die Schaltzeitverkürzung der Synchrondrehzahlbereich, der das Maß der Synchronungenauigkeit umfaßt, in Abhängigkeit zu einem oder mehreren Betriebsparametern unterschiedlich groß sein kann. Dies bedeutet, daß das Signal zum Schließen der neuen Kupplung bei einer Bereichsschaltung bzw. der Kupplung für Festpunktschaltung in mehr oder weniger großem Abstand tkS vom absoluten Synchronpunkt ausgelöst werden kann. Die Elektronik berücksichtigt hierbei, z. B. bei einer sehr schnellen Übersetzungsänderung die erforderliche Schließzeit vom Zeitpunkt der Signalauslösung bis Beginn des aktiven Schließvorganges. Dementsprechend wird das Kupplungs-Schließsignal entsprechend früh vor Erreichen des Synchronzustandes bzw. vor Erreichen des zulässigen Synchronbereiches eingeleitet. Dies ist insbesondere von Bedeutung bei hohen Beschleunigungsvorgängen, bei denen auch ein entsprechend hoher Kick-down-Effekt wirksam ist oder auch bei Bremsvorgängen, die eine entsprechend hohe Übersetzungs-Rückregelung des getriebes erfordern. Der vorgenannte Synchronbereich kann in Abhängigkeit zur Art der Kupplung - Reibkupplung, z.B. inform einer Lamellen- oder Konuskupplung oder formschlüssigen Kupplung mit oder ohne Abweisverzahnung unterschiedlich groß sein. Die genauen Werte sind vorzugsweise experimentell zu ermitteln. Die Information für den geeignetsten Schaltzeitpunkt entnimmt die Elektronik z.B. aus der Veränderungsgeschwindigkeit /-kraft der Übersetzung oder/und bzw. der Betätigungskraft /-geschwindigkeit von Fahrpedal oder/und Bremspedal oder anderen, dafür geeigneten Betriebparametern oder Einflußgrößen, die sich aus der experimentellen Ermittlung und Erkenntnissen ergeben. Das Rückmeldesignal zur Anzeige der geschlossenen neuen Kupplung ergibt den Impuls für die Einleitung der Korrekturverstellung Z bzw. tk .

Ebenso kann, wie oben näher erläutert, auch der Öffnungszeitpunkt für die alte Kupplung unterschiedlich variiert werden bzw. um ein entsprechendes Maß tkv vorgezogen werden.

Die Schaltkorrektureinrichtung mit zeitabhängiger Schaltkorrektur hat den Vorteil, daß auf einen kostenaufwendigen Hydrostat-Drucksensor und in manchen Fällen auch auf einen Hydrostat-Verstellweg-Sensor (Potentiometer; Weggeber) verzichtet werden kann. Dieses Verfahren eignet sich sowohl für die Bereichsschaltungen als auch für die Festpunktschaltungen KB; KH; KD bei Getrieben wie aus der DE 43 39 864 und EP 0 599 263 bekannt und auch für Wende-Schaltungen, z.B. für den Reversierbetrieb einer Arbeitsmaschine - Radlader, Traktor-Frontlader u.a. -. Insbesondere bei Anwendung fromschlüssiger Kupplungen mit bevorzugter Ausbildung als Abweisverzahnung oder Reibkupplungen kann sehr schaltzeitverkürzend das Öffnungssignal noch vor vollständiger Übergabe des Drehmomentes von der alten auf die neue Kupplung, d.h. vor Ende der Verstellkorrektur Z bzw. Korrekturzeit tk eingeleitet werden, da nach erfolgtem Öffnungssignal gegebenenfalls die betreffende bzw. alte Kupplung durch die Abweisfunktion unterstützend aufgedrückt werden kann. Das Öffnungssignal wird somit um die Zeit tkv vorgezogen, wobei tkv beeinflußbar ist durch ein oder mehrere oben genannter Betriebssignale oder/und Änderungssignale. Der Verstellvorgang des Hydrostatgetriebes kann somit weitgehend kontinuierlich auch während dem Öffnungsvorgang der vorgenannten Kupplung fortgesetzt werden wodurch eine Funktionsüberschneidung des Öffnungssignals bzw. des Öffnungsvorganges der genannten Kupplung und der Hydrostat-Verstellung wirksam ist, wodurch eine Schaltzeit-Verkürzung und hohe Schaltqualität erzielt wird.

Das System erkennt Schub-, Zug- oder Hoch- Rückschaltung aus der jeweiligen Motordrehzahl und der Drosselklappenstellung bzw. der Größe der Motoransteuerung, woraus die Korrektur-Richtung der Hydrostat-Verstelleinrichtung bestimmt wird.

Unterstützend zur Schaltkorrektur-Einrichtung kann gemäß der Erfindung auch eine zusätzliche Beeinflussung bzw. Absenkung des Motor-drehmomentes innerhalb der Schaltphase dienen durch automatische Gasrücknahme, z.B. bei Anwendung eines elektronischen Gaspedals, um optimale Schaltqualität für die Bereichs-, Wende- und Festpunktschaltungen in allen Betriebssituationen zu erzielen.

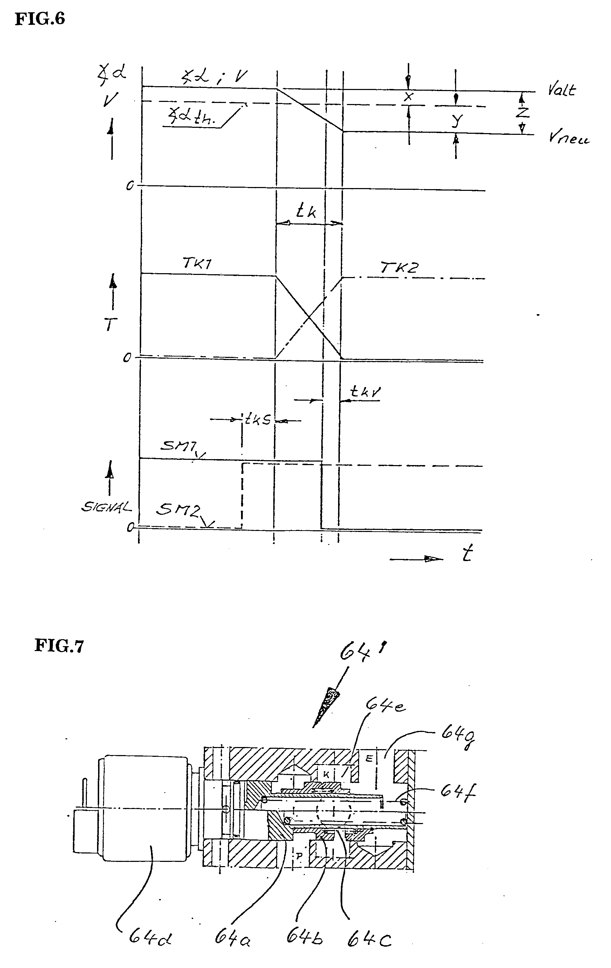

Beim Schließen einer neuen Kupplung wird zwangsläufig durch den Befüllungsvorgang dieser Kupplung eine Druckabsenkung des Steuerdruckes für die geschlossenen Kupplungen bewirkt, was zu einer Drehmomentabsenkung oder gar zum Öffnen der geschlossenen bzw. alten Kupplung führen kann. Das gilt für alle hydraulisch betätigbaren Kupplungen oder vergleichbare Einrichtungen oder Verbraucher. Um dies zu verhindern ist eine Einrichtung 64' gem. Figur 7 vorgesehen, die einen Ölrückfluß und somit einen Druckabbau des Steuerdruckes für die alte bzw. die geschlossene Kupplung verhindert oder verringert. Weitere Vorteile dieser Einrichtung 64' ,die bevorzugt als Rückschlag-Ventil innerhalb des Schaltventils 64 oder als separate Einrichtung ausgebildet ist, sind, daß die Speiseölmenge und somit die Speisepumpe 36 kleiner oder/und ein vorgesehener Hydrospeicher 36' ebenfalls kleiner ausgeführt werden oder auf diesen ganz verzichtet werden kann. Desweiteren kann bei Anwendung einer formschlüssigen Kupplung, insbesondere bei einer Ausführung wie in der DE 41 26 650 A1, die bevorzugt Mitbestandteil dieser Erfindung ist und darin in Figur 3, 3a und 3e dargestellt, mit einem niedrigeren Mitnehmerprofil ausgebildet werden, wodurch der Schaltweg und somit das Druckölvolumen auf ein geringeres Maß abgesenkt werden kann. Bei vorgenannter Kupplung mit formschlüssiger Kupplungsverzahnung handelt es sich um eine Kupplungseinrichtung, bei der auf einen Kupplungsträger ein drehfester aber axial verschiebbarer Kupplungsring angeordnet ist, der durch einen axialverschiebbaren hydraulisch betätigbaren Kolben beaufschlagt wird, wobei beim Schließen der Kupplung der genannte Kupplungsring in das entsprechende Gegenprofil der zweiten Kupplungshälfte eingreift. Das genannte Kupplungsprofil kann in abweisender oder nichtabweisender Form ausgebildet sein.

Die vorgenannte Einrichtung 64' ist bevorzugt als Rückschlagventil innerhalb eines Schaltventils 64 gemäß Figur 7d dargestellt, ausgeführt, z.B. derart, daß ein Steuerkolben 64a ein verschiebbares Verschlußelement 64b besitzt, das über ein Federelemt 64c nach geschlossener Kupplung die Zuflußleitung 64e zur Kupplung verschließt. Nach geschlossener Kupplung sind gleiche Druckverhältnisse in der Steuerleitung K und dem Steuerdruck P gegeben, wodurch geringe Federkraft der Feder 64c ausreichend ist, um das Verschlußelement bzw. den Kolbenring 64b in Verschlußstellung zu bringen. Das Schaltventil wird bevorzugt über ein Magnetventil 64d angesteuert, das als Vorsteuerventil wirksam ist. Im geöffneten Zustand wird das Schaltventil bei nichtangesteuertem Zustand des Magnetventils 64d gegen die Kraft einer Feder 64c in Neutralstellung gehalten, wobei die Kupplungsleitung 64e mit der Rücklaufleitung 64g drucklos verbunden ist. Hierbei wird der Verschlußkörper 64b durch den Steuerdruck P gegen den Druck der Feder 64c in einer festen Position zum Schaltkolben 64a gehalten und zwar solange, bis nach einem erfolgten Schaltvorgang die Kupplung geschlossen ist.

Die Öl-Rücklaufsperre in der Kupplungs-Druckleitung hat den weiteren Vorteil, daß Veränderungen des Systemdruckes durch irgendwelche zuschaltbare Verbraucher oder andere ein Kupplungsöffnen verhindern.

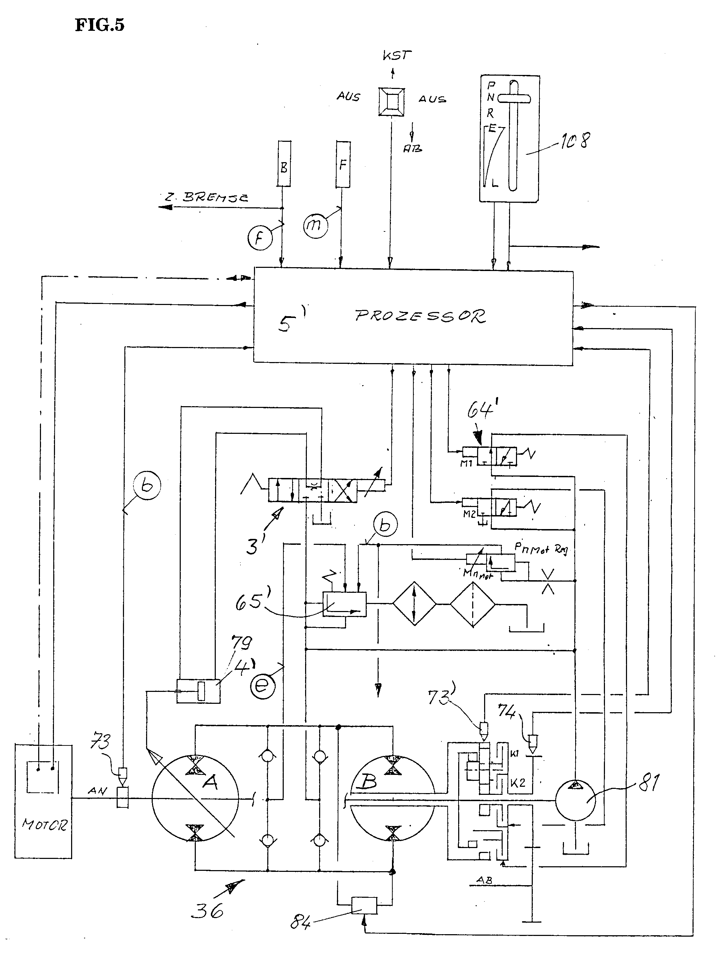

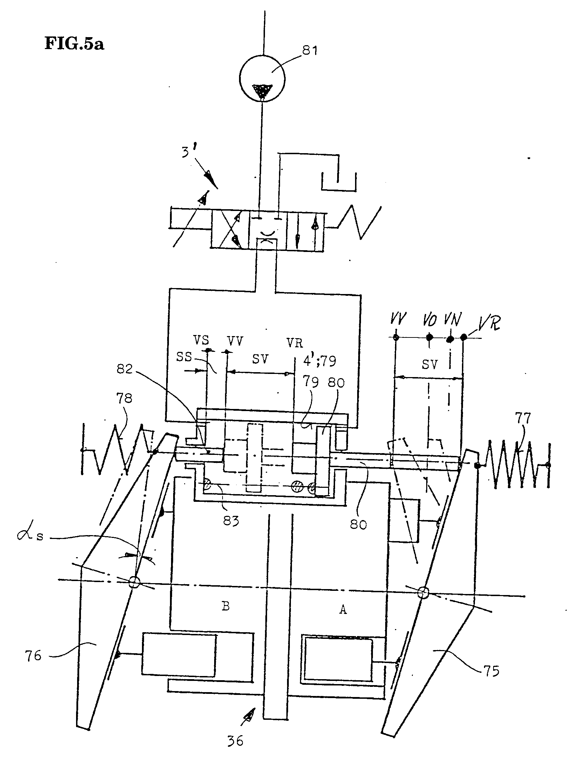

Das Getriebe sieht zur Verbesserung des Getriebewirkungsgrades ein Druckventil 65' (Fig. 5) vor, das eine von verschiedenen Betriebsparametern abhängige Druckmodulation des Systemdruckes bzw. des Speisedruckes bewirkt. Das Druckventil 65' ist auf einen Mindestdruck eingestellt, der bei niedrigem Lastzustand oder/und bei niedriger Motordrehzahl ausreicht zur Versorgung des Hydrostatgetriebes oder/und der Kupplungsansteuerung K1 bzw. K2 . Bei höherem Lastzustand wird durch ein lastabhängiges Signal, insbesondere Hydrostatdrucksignal e oder/und bei höherer Motordrehzahl über ein Drehzahldrucksignal b der Systemdruck entsprechend angehoben. Dies bedeutet, daß bei überwiegend Teillastbetrieb geringer Leistungsverlust durch die Speisepumpe 81 gegeben ist.

Bei Ausführung des stufenlosen Leistungsverzweigungsgetriebes mit sekundär geregeltem Hydrostatgetriebe 36 ist, wie in Fig. 5a dargestellt, die Verstellregelung erfindungsgemäß so ausgebildet, daß nur ein Verstellzylinder 79 bzw. gemeinsames Verstellorgang sowohl für die Primärregelung als auch für Sekundärregelung, d.h.für die Regelung der Hydrostateinheit A und B, wirksam ist. Dies ist in nicht dargestellter Weise auch bei Radialkolben-Hydrostaten anwendbar. Der Verstellzylinder 79 ist hierbei bevorzugt parallel versetzt zur Triebachse einer oder beider der Hydrostateinheiten A und B angeordnet. Ein Verstellkolben 80 steht in Wirkverbindung mit der Schwenkscheibe 75 der ersten Verstelleinheit A . Über einen Kolbenweg SV wird der gesamte positive und negative Verstellbereich der ersten Hydrostateinheit A durchfahren. Bei Schwenkscheiben-Stellung V0 ist das Fördervolumen der ersten Hydrostateinheit A auf Fördervolumen Null eingestellt, was bei einem Leistungsverzweigungsgetriebe einer gewissen Vorwärts-Fahrgeschwindigkeit bei hydraulischer Leistung Null entspricht wie in Fig. 2e und 2f dargestellt. Bei Schwenkscheiben-Stellung VV ist die Hydrostateinheit A auf maximales Fördervolumen eingestellt, was sowohl beim Zweibereichsgetriebe (gem. Fig. 1; 2b u.a.) als auch beim Einbereichsgetriebe (gem. Fig. 2c; 2d) Drehzahlgleichheit und Blockumlauf aller Glieder des Summierungsplanetengetriebes 37 und 37a entspricht. Beim Einbereichsgetriebe gem. Drehzahlplan Fig. 2e beginnt ab diesem Punkt VV die Sekundärregelung, wobei bei Weiterverstellung des Verstellkolbens 80 eine Rückstellung des Fördervolumens der Hydrostateinheit B folgt, indem die sekundäre Verstellscheibe 76 von maximalem Verstellwinkel auf entsprechend kleinen Verstellwinkel zurückgestellt wird über einen möglichen Sekundärverstellweg SS . Bei Stellung VS ist die Endübersetzung des Getriebes gem. Ausführung Fig. 2a; 2c erreicht. Die Sekundärregelung kann, wie in Fig. 5a dargestellt, über einen Verstellkolben 80 , der bei Beginn der Sekundärregelung auf ein entsprechendes Druckstück 82 drückt, realisiert werden. In einer anderen nicht dargestellten Ausführung wird ein innenliegender getrennter Verstellkolben im selben Verstellzylinder 79 auf die Schwenkscheibe 76 der zweiten Hydrostateinheit B wirksam. In einer weiteren, nicht dargestellten Ausführungsform kann die Sekundärregelung bereits innerhalb des Primärregelbereiches erfolgen, wobei z.B. innerhalb des Verstellweges bzw. Verstellwinkel αV die Sekundärverstellung erfolgt, wobei das Druckstück 82 entsprechend länger ausgebildet werden muß. Hierbei könnte z.B. bei maximalem Verstellwinkel 20° beider Hydrostateinheiten A und B nach einem Verstellweg αV 10° die Sekundärregelung beginnen, wobei am Endpunkt der Übersetzung bei einem Verstellwinkel αV = 20° entsprechend der Endstellung VV der Winkel αS der sekundären Schwenkscheibe 76 ca. 10° entsprechen würde. Dies bedeutet, daß bei dieser Ausführung am Ende der Primärverstellung bei Stellung VV der Endpunkt VS bei einem sekundären Verstellwinkel αS von etwa 10° erreicht ist.

Der Verstellkolben 80 ist bei dieser zuletzt beschriebenen Ausführungsform auch über eine Gelenkstange formschlüssig mit der Schwenkscheibe 75 verbunden, wobei bevorzugt die Kolbenstange 80' als Hohlkörper ausgebildet ist und das Verbindungsstück zwischen Kolben 80 und Schwenkscheibe 75 eine innenliegende Zug- und Druckstange mit gelenkiger Verbindung darstellt. Die Feder 77 kann hierbei entfallen.

Eine Druckfeder 83 dient zur Lagefixierung des Verstellkolbens 80 . Weitere, nicht dargestellte Federeinrichtungen, bevorzugt im Bereich des Verstellkolbens 79 mit doppelter Funktion, wie z.B. aus üblichen Verstelleinrichtungen hydrostatischer Getriebe bekannt, kann hier ebenfalls verwendet werden, z.B. zur Fixierung einer Neutrallage, die z.B. dem Anfahrpunkt, d.h. Fahrgeschwindigkeit Null des Fahrzeugs entspricht. Auch eine Feder-Arretierung bei V0 kann sinnvoll sein, insbesondere für widerstandsfreies Starten des Motors bei Kaltzustand oder Winterbetrieb.

Insbesondere beim Einbereichsgetriebe gem. Figur. 2a; 2c; 2d, das keine Bereichskupplungen enthält, besitzt das Getriebe ein Bypaßventil 84 gem Fig. 5, das zwischen den beiden Arbeitsdruckleitungen der Hydrostat-einheiten A; B geschaltet ist, welches insbesondere bei Motorstarten, Abschleppbetrieb, Motorstarten durch Anschieben oder auch zur Optimierung einer beschriebenen Festpunktschaltung oder allgemein zur Herstellung eines lastlosen Zustandes sinnvoll anwendbar ist. Die Betätigung des Bypaßventils kann, je nach Art der gestellten Forderungen, automatisch oder manuell erfolgen. Z.B. zur Vorbereitung nach Wählhebel-Betätigung ist für den Anfahrvorgang bevorzugt eine automatische Betätigung des Bypaßventils vorteilhaft. Bei Fahrzeug-Stillstand, insbesondere bei Wählhebelstellung "Neutral" oder/und "Park" ist zweckmäßigerweise immer die Bypaßfunktion eingeschaltet. Bei Vorwahl der Fahrtrichtung "Rückwärts" oder "Vorwärts" wird das Bypaßventil 84 automatisch nach einer vorgegebenen Charakteristik geshlossen. Der Schließvorgang ist bevorzugt derart gestaltet, daß beim Einbereichsgetriebe, das keine Bereichskupplung bzw. keine abtriebsseitige Trennkupplung besitzt, nach gestartetem Motor die Verstelleinrichtung des Hydrostatgetriebes automatisch die Anfahrstellung einnimmt, was der Hydrostatstellgröße VN entspricht. Diese Stellgröße kann, je nach Getriebeauslegung, etwa 60% des maximal negativen Verstellwinkels entsprechen, wie z.B. in Drehzahlplan Figur 2e dargestellt. Bevorzugt ist die Verstelleinrichtung durch eine mechanische Einrichtung, insbesondere Federeinrichtung, bei Fahrzeugstillstand immer an dieser Stelle arretiert, so daß keine oder nahezu keine Differenzölmengen zwischen den Arbeitsdruckleitungen der beiden Hydrostateinheiten A; B über das Bypaßventil 84 ausgeglichen werden müssen. In den meisten Anwendungsfällen kann daher das Bypaßventil 84 bei Neutralstellung immer geschlossen bleiben, so daß eine Betätigung nur zum Starten des Motors bei Winterbetrieb bzw. bei sehr kaltem Öl oder/und Starten des Motors durch Anschieben erforderlich ist. Die Betätigung kann hierbei bevorzugt durch eine manuelle Betätigung oder auch automatisch über die Steuer- und Regeleinrichtung bzw. Elektronik ausgelöst werden, wobei bei elektronischer Ansteuerung der Schließvorgang des Bypaßventils bevorzugt elektronisch aktiviert wird. Dabei ist sichergestellt, daß bei Motorstillstand das Bypaßventil 84 immer geöffnet ist. Das Bypaßventil 84 ist verschiedenartig ausführbar. Je nach Anwendungsfall und Forderungen ist ein spontaner oder allmählicher Druckaufbau bzw. Schließvorgang vorgesehen. Für das Motorstarten empfiehlt es sich, einen allmählichen kontinuierlichen Druckaufbau bzw. kontinuierlichen Schließvorgang zu realisieren, der bevorzugt druckabhängig funktioniert und vorteilhaft nach Vorwahl der Fahrtrichtung zur Schwenkscheiben-Einstellung auf Anfahrstellung VN dienen kann, indem z.B. druckabhängig der Verstellvorgang bis Erreichen des Einstellpunktes VN unterstützt werden kann.

## Patentansprüche

1. Hydrostatisch-mechanisches Getriebe mit Leistungsverzweigung bestehend aus einem Hydrostatgetriebe mit einer ersten Hydrostateinheit (A) verstellbaren Volumens und einer zweiten Hydrostateinheit (B) konstanten oder verstellbaren Volumens und einer Leistungsverzweigungs-Einrichtung mit einem Summierungsplanetengetriebe (37; 37a), bei dem die Antriebsleistung aufgeteilt wird in einen hydraulischen und einen mechanischen Zweig, die vor dem Getriebeausgang wieder aufsummiert wird **dadurch gekennzeichnet**, daß dem Leistungsverzweigungsgetriebe ein, insbesondere als Achsdifferential dienendes Differentialgetriebe (15; 58) zugeordnet ist, insbesondere für den Antrieb eines frontgetriebenen Fahrzeuges, welches achsversetzt zur Antriebswelle (16) angeordnet ist und über Zwischenglieder (10, 11, 12, 13, 14 bzw. 10, 13a, 14) angetrieben wird, daß das Hydrostatgetriebe (36) vorzugsweise eine gemeinsame Baueinheit für Hydrostateinheit (A und B) in form eines Kompaktgetriebes bildet und die Baueinheiten Hydrostatgetriebe (36), Summierungsplanetengetriebe (37; 37a) und gegebenenfalls Kupplungen (44) koaxial zueinander angeordnet sind, daß das Getriebe als Einbereichsgetriebe ohne Bereichs-Schaltkupplungen oder als Zweibereichsgetriebe mit vorzugsweise zwei Bereichs-Schaltkupplungen (K1; K2) ausgebildet ist, und das Getriebe bei beiden Ausführungsformen über den gesamten Vorwärts- und Rückwärts-Übersetzungsbereich mit Leistungsverzweigung arbeiten und wobei der Rückwärtsbereich (BR bzw. BR') im ersten Schaltbereich bzw. Verstellbereich des Hydrostatgetriebes mitenthalten ist, derart daß im Anfahrzustand das Hydrostatgetriebe auf eine gewisse bzw. definierte negative Verstellgröße (VN) eingestellt ist und daß das Hydrostatgetriebe (36) vorzugsweise über geräuschisolierende bzw. geräuschdämmende, insbesondere elastische oder/und als Reibdämpfung wirkende Elemente (9; 50; 51; 8) gegenüber dem Gehäuse (1) gelagert ist und die geräusch- und schwingungsisolierenden Elemente (9; 50; 51; 8) vorzugsweise gegen Radialkräfte, Axialkräfte und Umfangskräfte des Hydrostatgetriebes gegenüber dem Gehäuse (1) wirksam sind.

2. Getriebe nach Anspruch 1 **dadurch gekennzeichnet**, daß die Baueinheiten - Hydrostat-Getriebe (36), Summierungs-Planetengetriebe (37; 37a) und gegebenenfalls Differential-Getriebe (15; 58) - in einem gemeinsamen Gehäuse (1) angeordnet sind, wobei das Gehäuse (1) einteilig oder mehrteilig ausgebildet ist und bevorzugt eine zentrale Gehäuse-Öffnung (20) vorgesehen ist, die als Montage-Öffnung für das Hydrostat-Getriebe (36), das Summierungs-Planetengetriebe (37; 37a), gegebenenfalls die Kupplungen (K1, K2) und das Abtriebsrad (10) dient und daß gegebenenfalls für die Montage einer zum Antriebsstrang gehörenden Zwischenwelle (12) eine zweite, der zentralen Gehäuse-Öffnung (20) gegenüberliegende, achsversetzt zur Zentralachse angeordnete Gehäuse-Öffnung (21) enthalten ist, die mittels einem Gehäuse-Deckel (3), der vorzugsweise die Lagerung (24) für die Zwischenwelle (12) enthält, verschließbar ist (Fig. 1; 2a; 2b) oder
daß die Baueinheiten - Hydrostat-Getriebe (36), Summierungs-Planetengetriebe (37; 37a) und gegebenenfalls Differential-Getriebe (15; 58) - in einem gemeinsamen Gehäuse (1) angeordnet sind, wobei das Gehäuse (1) einteilig oder mehrteilig ausgebildet ist und bevorzugt eine zentrale Gehäuse-Öffnung (20) besitzt, die als Montage-Öffnung für das Hydrostat-Getriebe (36), das Summierungs-Planetengetriebe (37; 37a), gegebenenfalls die Kupplungen (K1, K2) und das Abtriebsrad (10) dient.

3. Getriebe nach Anspruch 1 **dadurch gekennzeichnet**, daß die Baueinheiten - Hydrostat-Getriebe (36), Summierungs-Planetengetriebe (37; 37a), gegebenenfalls Kupplungspaket (43) und Abtriebsrad (10) (Fig. 1; 2a) oder - Abtriebsrad (10), gegebenenfalls Kupplung (43), Summierungsplanetengetriebe (37; 37a) und Hydrostatgetriebe (36) (Fig. 1a; 2c) - in jeweils aufgezählter Reihenfolge auf einer Achse hintereinander angeordnet sind, wobei das Abtriebsrad (10) mit einem gemeinsamen Kupplungsglied (44) für wenigstens zwei Kupplungen (K1, K2) oder mit einer Welle (62) des Summierungs-Planetengetriebes (37a) verbunden ist, wobei das Abtriebsrad (10) durch ein Hauptlager (27'), das als selbständiges Lager (z.B. Vierpunktlager, doppeltes Kegelrollenlager oder zweireihiges Schrägkugellager) ausgebildet ist oder durch ein Hauptlager (27) und ein weiteres Lager (45) auf einem mit dem Gehäuse (1) fest verbundenen Lagerträger (46) gelagert ist, wobei das Hauptlager (27) bevorzugt als Festlager und das zweite Lager (45) vorzugsweise als Loslager ausgebildet ist, daß der Lagerträger (46) vorzugsweise als Ölführungskörper ausgebildet ist und zur Ölzufuhr und für die Schaltung der Kupplungen (K1, K2) oder/und für Schmieröl oder/und als Steueröl-Leitung für die Hydrostat-Stabilisierung über eine entsprechende Ölleitung in der Hydrostat-Triebwelle (48) für eine modulierbare Anspressung wenigstens eines der Hydrostat-Aggregate (A; B) an ihre Steuerscheibe dient und/oder
daß in einer weiteren, nicht dargestellten Ausführungsform die Baueinheiten - Hydrostatgetriebe (36), gegebenenfalls Kupplungspaket (43), Summierungs-Planetengetriebe - in aufgezählter Reihenfolge hintereinander angeordnet sind , wobei das Abtriebsrad (10) mit einem Glied des Summierungs-Planetengetriebes verbunden ist, wobei das Abtriebsrad (10) durch ein selbständiges Hauptlager (27') oder ein Hauptlager (27) und weiteres Lager (45) auf einem mit dem Gehäuse (1) fest verbundenen Lagerträger (46) gelagert ist, und wobei das Hauptlager (27) vorzugsweise als Festlager und das zweite Lager (45) vorzugsweise als Loslager ausgebildet ist.

4. Getriebe nach Anspruch 1 bis 3 **dadurch gekennzeichnet**, daß das Getriebegehäuse (1) frontseitig durch einen Frontdeckel (19; 38) verschlossen ist, der als Blechprägeteil, bevorzugt aus Antidröhn-Blech bzw. Sandwich-Blech bzw. aus geräuschminderndem Werkstoff hergestellt ist.

5. Getriebe nach einem oder mehreren der vorangehenden Ansprüche **dadurch** **gekennzeichnet**, daß das Getriebe nur zwei Kupplungen (K1) und (K2) besitzt, die zum Schalten von zwei hydrostatisch-mechanischen Schaltbereichen dienen, wobei im ersten Schaltbereich auch der Rückwärtsbereich mitenthalten ist,
oder daß das Getriebe wenigstens zwei Schaltkupplungen (K1) und (K2) besitzt, wobei der erste Schaltbereich rein-hydrostatisch oder in Leistungs-verzweigung arbeitet, oder daß das Getriebe zwei und mehr Schaltbereiche mit mehreren Schaltkupplungen besitzt, wobei alle Bereiche in Leistungsverzweigung arbeiten.

6. Getriebe nach einem oder mehreren der vorangehenden Ansprüche **dadurch** **gekennzeichnet**, daß die Speiseöl-Versorgung aus der Zentral-Hydraulik des Gesamt-Fahrzeuges erfolgt, oder daß die Speisepumpe in bekannter Weise im Hydrostatgetriebe (36) untergebracht ist oder daß die Speisepumpe (49) als außen aufsetzbare Pumpeneinheit anmontierbar und über die Zentralwelle (48) antreibbar ist.

7. Getriebe nach einem oder mehreren der vorangehenden Ansprüche **dadurch** **gekennzeichnet**, daß das Hydrostatgetriebe (36) über eine Lagereinrichtung (42) verfügt, wonach die Lagerkörper (9; 50) aus geräuschisolierendem bzw. geräuschdämmenden Material, bevorzugt einem Elastomer, bestehen und daß eine Drehmoment-Mitnahme-Einrichtung (9) vorgesehen ist, in der Form, daß die Umfangskräfte an geräuschdämmenden Elementen abgestützt werden und daß das Hydrostatgetriebe (36) an zwei oder nur an einer Lagerstelle (42) am Hauptgehäuse (1) radial gelagert ist und eine zweite Lagerstelle bzw. die Gegenlagerung über ein auf der Antriebswelle bzw. Zentralwelle (16) sitzendes Zentrallager (39) oder/und ein in der Antriebsmaschine (Kurbelwelle 60) sitzendes Lager (84) erfolgt.

8. Getriebe nach einem oder mehreren der vorangehenden Ansprüche **dadurch** **gekennzeichnet**, daß die Hydrostateinheiten (A, B) als Axialkolben-Maschinen oder als nicht dargestellte Radialkolben-Maschinen ausgebildet sind, wobei die erste Hydrostateinheit (A) vertellbares Volumen und die zweite Hydrostateinheit (B) konstantes oder verstellbares Volumen aufweist.

9. Getriebe nach einem oder mehreren der vorangehenden Ansprüche **dadurch** **gekennzeichnet**, daß für Allrad-Antrieb ein Kegelradgetriebe (59) vorgesehen ist, dessen Kegelrad (53) mit dem Differential-Antriebsrad (14) drehverbunden ist und daß mit der Abtriebswelle (55) für den Hinterrad-Antrieb verbundene Kegelritzel (54) in das Getriebegehäuse (1) mit der dazugehörigen Kegelritzel-Lagerung einsetzbar ist.

10. Hydrostatisch-mechanisches Getriebe mit Leistungsverzweigung bestehend aus einem Hydrostatgetriebe mit einer ersten Hydrostat-Einheit (A) verstellbaren Volumens und einer zweiten Hydrostat-Einheit (B), konstanten oder verstellbaren Volumens und einer Leistungsverzweigungs-Einrichtung mit einem Summierungs-Planetengetriebe (37; 37a), bei dem die Antriebsleistung aufgeteilt wird in einen hydraulischen und einen mechanischen Zweig, die vor dem Getriebe-Ausgang wieder aufsummiert wird, wobei vorzugsweise dem Leistungsverzweigungs-Getriebe ein, insbesondere als Achs-Differential dienendes Differentialgetriebe (15; 58) zugeordnet ist, bevorzugt für den Antrieb eines frontgetriebenen Fahrzeugs und wobei vorzugsweise das Differential-Getriebe (15; 58) achsversetzt zur Antriebswelle (16) angeordnet ist, das über Zwischenglieder (10, 11, 12, 13, 14 bzw. 10, 13a, 14) angetrieben wird
**dadurch gekennzeichnet**, daß das Summierungs-Planetengetriebe bevorzugt dreiwellig ausgebildet ist und die Hydrostat-Einheiten (A und B) des Hydrostatgetriebes (36) konzentrisch oder koaxial zueinander angeordnet sind, wobei die Antriebswelle (16) mit der ersten Hydrostateinheit (A) und einer ersten Welle (61; 29), die zweite Hydrostateinheit (B) mit der zweiten Welle (63; 30) des Summierungs-Planetengetriebes und die dritte Welle (62) über einen Triebstrang (10, 11, 12, 13, 14 bzw. 10, 13a, 14) mit dem Differential (15) ständig in Triebverbindung steht und wobei das Summierungs-Planetengetriebe (37a; 37) koaxial zum Hydrostat-Getriebe (36) plaziert ist (Fig. 2a; 2c; 2d).

11. Getriebe nach einem oder mehreren der vorangehenden Ansprüche **dadurch** **gekennzeichnet**, daß das Summierungs-Planetengetriebe (37a) dreiwellig mit einem Sonnenrad (61) einer Stegwelle (62) und einem Hohlrad (63) ausgebildet ist, wobei das Sonnenrad (61) mit der ersten Hydrostateinheit (A) und der Antriebswelle (16) das Hohlrad (63) mit der zweiten Hydrostateinheit (B) und der Steg (62) mit dem Abtrieb (10) bzw. dem Abtriebsstrang (10, 11, 12, 13, 14 bzw. 10, 13a, 14) und dem Differential (15) in ständiger Triebverbindung steht oder
daß das Getriebe mit einem vierwelligen Summierungs-Planetengetriebe (37) ausgebildet ist und zwei Hohlräder (29, 30) einen Steg (32) und ein Sonnenrad (31) besitzt , wobei ein erstes Hohlrad (29) mit der ersten Hydrostateinheit (A) und der Antriebswelle (16), das zweite Hohlrad (30) mit der zweiten Hydrostateinheit (B) ständig verbunden sind und der Steg (32) und das Sonnenrad (31) über Kupplungen (K1 oder K2) mit dem Abtrieb (10 bis 15) über den entsprechenden Triebstrang (10, 11, 12, 13, 14, 15 bzw. 10, 13a, 14, 15) verbindbar ist.

12. Getriebe nach einem oder mehreren der vorangehenden Ansprüche **dadurch** **gekennzeichnet**, daß das Summierungs-Planetengetriebe dreiwellig ausgebildet ist und ein erstes Hohlrad (29), ein zweites Hohlrad (30) und eine Stegwelle (32) besitzt, auf der ineinandergreifende Planetenräder (33 und 34) angeordnet sind, wobei das erste Hohlrad (29) mit der Antriebswelle und der ersten Hydrostateinheit (A), das zweite Hohlrad (30) mit der zweiten Hydrostateinheit (B) und der Steg mit dem Triebstrang (10, 11, 12, 13, 14 bzw. 10, 13a, 14) und dem Differential (15) ständig verbunden ist (nicht dargestellt).

13. Getriebe nach einem oder mehreren der vorangehenden Ansprüche **dadurch** **gekennzeichnet** daß das Getriebe bei Ausführung (Fig. 2a) mit dreiwelligem Planetengetriebe (37a) ein Einbereichs-Getriebe mit Leistungsverzweigung über den gesamten Übersetzungsbereich vorwärts und rückwärts darstellt, wobei bei Fahrgeschwindigkeit "Null" die Hydrostateinheit (A) auf ein bestimmtes negatives Verdrängungsvolumen zwischen der maximalen negativen Verstellung und Verdrängungsvolumen "Null" eingestellt ist und die erste Welle (61) und die zweite Welle (63) des Summierungs-Planetengetriebes (37a) gegensinnige Drehrichtungen aufweisen und bei dieser Einstellung bei Vergrößerung des Verdrängungsvolumens eine Rückfahrgeschwindigkeit bzw. negative Abtriebsdrehzahl und bei Verkleinerung bis Verstellgröße "Null" und darüber hinaus bis zur maximalen negativen Verstellung sich der Vorwärtsfahrbereich erstreckt und daß bei Ausführung (Figur 2b) mit vierwelligem Summierungs-Planetengetriebe (37) ein zweiter hydrostatisch-mechanischer Schaltbereich mit Leistungsverzweigung angeschlossen ist, wobei im ersten Schaltbereich der Rückwärtsbereich mitenthalten ist, der wirkungsgleich wie beim Einbereichs-Getriebe (gem. Fig. 2a; 2c) durch eine negative Teilverstellung ab einem gewissen Stellpunkt des Hydrostatgetriebes und der Vorwärtsbereich aus einem Teil des negativen und dem gesamten positiven Verstellbereich des Hydrostatgetriebes erfolgt und wobei der zweite Schaltbereich mit Leistungsverzweigung bei Synchronlauf der zu schaltenden Kupplungsglieder (K1, K2) erfolgt und daß bevorzugt eine Schaltkorrektur-Einrichtung vorgesehen ist, die derart funktioniert, daß die alte Kupplung erst nach einer bestimmten lastabhängigen Verstellkorrektur bei nahezu drehmomentfreiem Zustand öffnet.

14. Getriebe nach einem oder mehreren der Ansprüche 10 bis 13 **dadurch** **gekennzeichnet**, daß eine Hydrostat-Überbrückungs-Einrichtung vorgesehen ist, wodurch durch Schließen einer oder mehrerer Kupplungen (67; 68; 69; K1 und K2) das Hydrostatgetriebe (36) lastlos gesetzt werden kann, wobei bevorzugt die Hydrostat-Überbrückungs-Einrichtung so ausgebildet ist, daß eine Kupplung (67; 68) oder mehrere Kupplungen (K1, K2) Glieder (62, 63) des Summierungs-Planetengetriebes miteinander verbindet oder in Blockumlauf oder in wälzleistungslosen Zustand bringen, so daß das Hydrostatgetriebe (36) lastlos gesetzt werden kann oder/und daß eine Bremse oder eine Kupplung (69) vorgesehen ist, die die zweite Hydrostateinheit (B) mit dem Gehäuse (1) im hydrostatisch leistungslosen Zustand verbindet, so daß kein Drehmoment in diesem Betriebszustand das Hydrostatgetriebe belastet und den Hydrostatkreislauf differenzdruckfrei hält oder/und daß eine Bereichsblockschaltung vorgesehen ist, derart daß die Übersetzung an den Bereichsgrenzen festgehalten wird durch Schließen zweier Bereichskupplungen (K1 und K2), wobei gleichzeitig das Hydrostatgetriebe (36) in lastlosem Zustand versetzt wird, in der Weise, daß ein Bypaßventil zwischen den beiden Arbeitsdruckleitungen der beiden Hydrostateinheiten (A, B) vorgesehen ist und innerhalb diesem Schaltzustand einen Kurzschluß zwischen den beiden Arbeitsdruckleitungen herstellt, so daß zumindest annähernd drehmomentfreier bzw. differenzdruckfreier Zustand des Hydrostatgetriebes gewährleistet ist oder daß die Hydrostatverstellung so eingeregelt wird, daß kein Differenzdruck im Hydrostat-Kreislauf auftritt.

15. Getriebe nach einem oder mehreren der vorangehenden Ansprüche **dadurch** **gekennzeichnet**, daß die Hydrostat-Überbrückungskupplung (67; 68) oder/und die Kupplung bzw. Bremse (69) bei Synchronlauf der zu schaltenden Kupplungsglieder eingerückt bzw. geschlossen wird und daß das Öffnungssignal für diese vorgenannte Kupplung ebenfalls in nahezu lastlosem Zustand erfolgt, in dem das Hydrostatgetriebe vor dem Öffnen der Kupplung so eingeregelt wird, als es dem Lastzustand bei geöffnetem Zustand der entsprechenden Kupplung entspricht, wobei die Volumenstrom-Einstellung bzw. die Hydrostat-Verstelleinrichtung vorzugsweise durch lastabhängige Signale, insbesondere das Motordrehmoment oder/und das Antriebs-drehmoment der Antriebswelle (16) bestimmenden Signale wie Drosselklappenstellung; Fahrpedalstellung, Fahrpedal-Verstellgeschwindigkeit, Motordrehzahl, Motor-ansteuersignal; Bremssignal realisiert wird.

16. Getriebe nach einem oder mehreren der Ansprüche 10 bis 15 **dadurch** **gekennzeichnet**, daß für die Bereichsschaltung oder/und die Einrichtungen zur Hydrostat-Überbrückung (Kupplung 68; 67; 69 bzw. K1, K2) die Hydrostat-Regeleinrichtung zur Bestimmung des Verdrängungsvolumens so ausgelegt ist, daß innerhalb der vorgenannten geschlossenen Kupplungen bzw. der damit verbundenen Betriebszustände die Hydrostatverstellung einer ständigen lastabhängigen Vorgabe oder Anpassung in lastlosem oder zumindest annähernd lastlosem Zustand des Hydrostatgetriebes folgt, so daß bei Aufhebung des genannten hydrostatentlastenden Schalt- bzw. Betriebzustandes, das heißt bei Öffnen der betreffenden Kupplung und gleichzeitig geschlossenem oder schließendem Bypaßventil, drehmomentfreier oder zumindest annähernd drehmomentfreier Zustand dieser Kupplung gegeben ist, so daß kein Schaltstoß erfolgt.

17. Getriebe nach einem oder mehreren der Ansprüche 10 bis 16 **dadurch** **gekennzeichnet**, daß das Hydrostatgetriebe (36) als Kompakt-Getriebe ausgebildet ist und beide Hydrostat-Einheiten (A und B) beinhaltet und daß dieses Kompaktgetriebe einen gemeinsamen Baustein für das Einbereichs-Getriebe (Gem. Fig. 1 und 2b) und für die Getriebe-Ausführung mit zwei Schaltbereichen (gem. Fig. 1 u. 2b) darstellt, wobei Ausführung (Fig. 2a) mit einem Schaltbereich für den niedrigen Leistungsbereich und Ausführung nach (Fig. 2b) mit zwei Schaltbereichen für den mittleren und höheren Leistungsbereich vorgesehen ist.

18. Getriebe nach einem oder mehreren der Ansprüche 1 bis 17 **dadurch** **gekennzeichnet**, daß das Summierungsplanetengetriebe dreiwellig ausgebildet ist, wobei die erste Welle als Sonnenrad (61) oder als Hohlrad (29) ausführbar ist (nicht dargestellt).

19. Getriebe nach einem oder mehreren der Ansprüche 10 bis 18 **dadurch** **gekennzeichnet**, daß das Hydrostatgetriebe in Form einer Axialkolben-maschine oder/und Radialkolbenmaschine ausgebildet ist, wobei beide Einheiten (A und B) parallel nebeneinander oder radial übereinander in konzentrischer oder koaxialer Anordnung realisierbar sind oder daß eine der beiden Einheiten (A, B) als Axialkolben- und die andere als Radialkolben-Maschine ausführbar ist.

20. Getriebe nach einem oder mehreren der Ansprüche 10 bis 19 **dadurch** **gekennzeichnet**, daß das Summierungsplanetengetriebe (37, 37a) räumlich dem Hydrostatgetriebe (36) nachgeordnet ist (gem. Fig 2a; 2b) oder räumlich auf der Eingangsseite des Getriebes zwischen Antrieb bzw. Antriebsmotor und dem Hydrostatgetriebe (36) dazwischengeschaltet ist (gem. Fig. 2c, 2d).

21. Stufenloses Getriebe, insbesondere mit hydrostatischer Leistungs-verzweigung, bevorzugt für Kraftfahrzeuge mit vorzugsweise mehreren Schaltbereichen oder/und mit einer Einrichtung zur Hydrostat-Überbrückung in Form einer Festpunktschaltung (KH, KB, KD), mit einer ersten Hydrostateinheit (A) verstellbaren Volumens und einer zweiten Hydrostateinheit (B), vorzugsweise konstanten Volumens, mit einem Summierungs-planetengetriebe zum Aufsummieren der hydraulischen und mechanischen Leistung, bei dem das Schalten ohne Lastunterbrechung oder/und ohne Schaltstoß der oben genannten Schaltbereiche bzw. der Festpunktschaltungen erfolgt, wobei die Hydrostateinheiten (A) und (B) beim Bereichswechsel ihre Funktion als Pumpe und Motor vertauschen und der Bereichswechsel bei Synchrondrehzahl der zu schaltenden Kupplungsglieder der neuen Kupplung bzw. der Glieder für die Festpunktschaltung erfolgt und die alte Kupplung bzw. Kupplung der Festpunktschaltung (KH; KB; KD) erst nach erfolgter Verstellkorrektur (Z) bzw. einer Verstell-Korrekturzeit (tk) bei einem neuen Verdrängungsvolumen (Vneu) öffnet,
**dadurch gekennzeichnet**, daß das Öffnungssignal für die alte Kupplung bei einem Bereichswechsel oder Kupplung der Festpunktschaltung (KH; KB; KD) aus einem oder mehreren drehmomentbestimmenden Betriebsgrößen des Antriebsmotors (M) (Drosselklappenstellung bzw. Motoransteuer-Signal, Fahrpedalwegsignal (a) , Motoransteuersignal, Drehzahlsignal (b) , Temperatursignal u.a.) gebildet wird oder daß das Öffnungssignal direkt oder indirekt aus einem mit dem Antrieb des Getriebes oder/und des Antriebsmotors (M) in Wirkverbindung stehenden Drehmomentsensor gebildet wird oder/und daß die Schaltkorrektur-Größe (Z) über eine aus dem jeweiligen Lastzustand von Motor oder/und Getriebe abhängigen Korrektur-Zeit (tk) bestimmt wird, wobei die Schaltkorrekturgröße (Z) über eine Korrektur-Verstellzeit (tk) oder nach einem vorprogrammierten Zeitfaktor ermittelt wird, derart daß die für die Schaltkorrektur (Z) erforderliche Korrekturzeit (tk) ermittelt wird aus dem jeweiligen Lastzustand von Motor oder/und Getriebe, wobei bei einer Getriebeauslegung mit mehreren unterschiedlichen Schaltbereichsgrößen für jede Bereichsschaltstelle (z.B. 1/2; 2/3; 3/4; bzw. 4/3; 3/2; 2/1) und Drehmomentgröße (Tmot; Tan) eine entsprechend angepaßte eigene Verstellkorrekturgröße oder Korrekturzeit (tk) oder entsprechend angepaßtes neues Verdrängungsvolumen (Vneu) zugeordnet und vorprogrammiert ist zur Bestimmung des Öffnungssignals der alten bzw. betreffenden Kupplung, so daß die dem jeweiligen Lastzustand angepaßte Verstell-Korrekturgröße für schaltstoßfreien Betrieb wirksam wird.

22. Getriebe nach Anspruch 21 **dadurch gekennzeichnet**, daß innerhalb der Schaltphase (bei geschalteter alter und neuer Kupplung) auftretende Belastungs- bzw. Drehmomentveränderungen derart berücksichtigt werden, daß das Öffnungssignal vom momentan wirksamen Belastungszustand des Motors oder/und Getriebes bzw. des Drehmomentes (Ta) bestimmt wird oder/und daß das jedem Belastungszustand und jeder Schaltstelle (Bereichsschaltung; festpunktschaltung) vorgegebene Öffnungssignal bzw. vorgegebene neue Verdrängungsvolumen (Vneu) eine entsprechend angepaßte Korrektur erfährt in Abhängigkeit zum momentanen Betriebszustand oder/und momentan wirksamen Betriebswerten wie (Fahrpedaländerung, -änderungsgeschwindigkeit, Beschleunigungszustand, Drosselklappenstellung, Temperatur u.a.) oder/und zur Art der Kupplungsausführung (Kupplungsfaktor fk , Reibkupplung, formschlüssige Kupplung).

23. Getriebe nach einem der Ansprüche 21 und 22 **dadurch gekenn****zeichnet**, daß die Schaltkorrektur-Einrichtung eine Störfunktion oder/und Stoßsignal erkennt und verarbeitet, derart daß ein oder mehrere Änderungssignale wirksam werden, die eine oder mehrere der inneren Festwerte bzw. vorgegebenen Größen verändern, so daß eine automatische gezielte Anpassung der Schaltkorrekturgrößen (Z; tk) erfolgt,wobei vorzugsweise das Änderungssignal zur Änderung von Festwerten oder/und vorgegebener Größen bzw. Grundgrößen ein Drehzahlsignal oder/und ein Geschwindigkeitsänderungssignal oder/und ein Massenänderungs-Signal oder/und ein Signal, das die Änderung einer Kontinuität in irgendwie gearteter Form sein kann und daß die Änderung innerer Festwerte, insbesondere aus einem oder mehreren Störsignalen, die innerhalb einer oder mehrerer Schaltungen auftreten, resultieren.

24. Getriebe nach einem oder mehreren der vorangehenden Ansprüche **dadurch** **gekennzeichnet**, daß für die Bereichsschaltung oder Festpunktschaltungen das Signal zum Schließen der neuen Kupplung bzw. der betreffenden Kupplung innerhalb eines definierten Synchronbereiches ausgelöst wird, wobei der Synchronbereich bzw. Synchron-Fehlerbereich in Abhängigkeit verschiedener Betriebsparameter automatisch änderbar ist, wodurch unterschiedlich große Verhaltezeiten (tkS) für den Schalt-Signalbeginn vorprogrammiert bzw. realisierbar sind.

25. Getriebe nach einem oder mehreren der vorangehenden Ansprüche **dadurch** **gekennzeichnet**, daß für die Kupplungssteuerung eine Einrichtung (64') vorgesehen ist, die beim Schalten einer Kupplung oder eines anderen Verbrauchers einen Druckabfall der/einer geschlossenen Kupplung verhindert oder verringert bevorzugt durch eine Rücklaufsperrfunktion außerhalb oder innerhalb eines Kupplungsschaltventils.

26. Getriebe nach einem oder mehreren der Ansprüche 1 bis 32 **dadurch** **gekennzeichnet**, daß das Gehäuse (1) eine quer zu den Wellenachsen liegende Gehäuse-Öffnung (22) für die Montage des Differential-Getriebes (15; 58) besitzt.

27. Getriebe nach einem der Oberbegriffe vorgenannter Ansprüche **dadurch** **gekennzeichnet**, daß die Hydrostateinheiten (A und B) als Verstelleinheiten ausgebildet sind, wobei die Verstellung beider Einheiten über einen gemeinsamen Verstellzylinder bzw. Verstellservo bzw. Verstellorgang erfolgt und bevorzugt beide Einheiten (A und B) durch einen gemeinsamen Verstellkolben (80) angesteuert werden.

28. Getriebe nach einem oder mehreren der vorangehenden Ansprüche **dadurch** **gekennzeichnet**, daß ein Bypaßventil (84) vorgesehen ist, das zwischen die beiden Arbeitsdruckleitungen der Hydrostateinheiten (A und B) geschaltet ist, welches insbesondere bei Getriebeausführung ohne Bereichsschaltkupplungen Bypaßfunktion herstellt, insbesondere bei Fahrzeugstillstand oder/und bei Abschleppbetrieb oder/und zur Herstellung eines neutralen bzw. lastlosen Betriebszustandes.
